# EUROPEAN PATENT SPECIFICATION

(11) **EP 3 952 606 B1**
(45) Date of publication and mention of the grant of the patent: **22.07.2026**
(21) Application number: 20779720.0
(22) Date of filing: 25.03.2020
(51) Int. Cl.: H04L 1/1607, H04L 1/1822, H04L 1/1867, H04L 5/00, H04W 76/27, H04W 72/21

(54) **INDICATION METHOD, TERMINAL DEVICE AND NETWORK SIDE DEVICE**
ANGABEVERFAHREN, ENDGERÄTEVORRICHTUNG UND NETZWERKSEITIGE VORRICHTUNG
PROCÉDÉ D'INDICATION, DISPOSITIF TERMINAL ET DISPOSITIF CÔTÉ RÉSEAU

(30) Priority: 27.03.2019 CN 201910240021
(43) Date of publication of application: 09.02.2022
(73) Proprietor: VIVO MOBILE COMMUNICATION CO., LTD., Dongguan, Guangdong 523860 (CN)
(72) Inventor: LIU, Siqi, Dongguan, Guangdong 523860 (CN); JI, Zichao, Dongguan, Guangdong 523860 (CN); ZHENG, Qian, Dongguan, Guangdong 523860 (CN); LIANG, Jing, Dongguan, Guangdong 523860 (CN)
(74) Representative: Lavoix
(86) International application number: PCT/CN2020/081018
(87) International publication number: WO 2020/192671

(56) References cited:
- WO-A1-2018/127057
- CN-A- 102 088 433
- CN-A- 109 121 166
- CN-A- 109 121 212
- CN-A- 109 152 036
- US-A1- 2018 139 734
- CMCC: "Outstanding Issues for multiple SPSs/CGs Support", vol. RAN WG2, no. Athens, Greece; 20190225 - 20190301, 1 March 2019 (2019-03-01), XP051603785, Retrieved from the Internet <URL:http://www.3gpp.org/ftp/tsg%5Fran/WG2%5FRL2/TSGR2%5F105/Docs/R2%2D1902551%2Ezip> [retrieved on 20190301]
- INTEL CORPORATION: "Remaining issues on NR scheduling & HARQ", vol. RAN WG1, no. Chengdu, China; 20181008 - 20181012, 29 September 2018 (2018-09-29), XP051518160, Retrieved from the Internet <URL:http://www.3gpp.org/ftp/tsg%5Fran/WG1%5FRL1/TSGR1%5F94b/Docs/R1%2D1810756%2Ezip> [retrieved on 20180929]

## Description

### TECHNICAL FIELD

This disclosure relates to the field of communications technologies, and in particular, to an indication method, a terminal device, and a network-side device.

### BACKGROUND

In the related art, a network-side device may configure two types of resources for a terminal device. A first-type resource may be a resource that the network-side device does not need to transmit additional signaling to activate and/or deactivate; and a second-type resource may be a resource that the network-side device needs to transmit additional signaling to activate and/or deactivate.

For the second-type resource, if the network-side device transmits deactivation signaling to the terminal device, but the terminal device may fail to receive the deactivation signaling, or fail to parse the deactivation signaling, the network-side device considers that the terminal device has released the resource, and may schedule transmission of other terminal devices on the resource, thereby resulting in interference between transmissions of different terminal devices. If the network-side device transmits activation signaling to the terminal device, but the terminal device may fail to receive the activation signaling, or fail to parse the activation signaling, the network-side device considers that the resource has been activated, and does not use the resource for transmission of other terminal devices, resulting in waste of the resource.

It can be learned that in the related art, the terminal device and the network-side device have inconsistent understanding on a resource status.

US 2018/0139734A1 discloses semi-persistent scheduling confirmation.

### SUMMARY

This disclosure provides an indication method, a terminal device, and a network-side device, as defined in the appended set of claims, so as to resolve the problem in the related art that a terminal device and a network-side device have inconsistent understanding on a resource status.

In this disclosure, the first information is sent to the network-side device, where the first information is used to indicate the target status of the at least one grant and the target status includes at least one of the following states: a deactivated state or an activated state. This can improve consistency of understanding on the resource status between the terminal device and the network-side device, thereby reducing mutual interference between data transmissions, or reducing resource waste.

### BRIEF DESCRIPTION OF DRAWINGS

To describe the technical solutions in the embodiments of this disclosure more clearly, the following briefly introduces the accompanying drawings required for describing the embodiments of this disclosure. Apparently, scope of the invention is defined by the scope of the appended claims.
FIG. 1 is a structural diagram of a network system applicable to an embodiment of this disclosure;
FIG. 2 is a flowchart of an indication method according to an embodiment of this disclosure;
FIG. 3 is a flowchart of an indication method according to another embodiment of this disclosure;
FIG. 4 is a flowchart of an indication method according to another embodiment of this disclosure;
FIG. 5 is a structural diagram of a terminal device according to an embodiment of this disclosure;
FIG. 6 is a structural diagram of a network-side device according to an embodiment of this disclosure;
FIG. 7 is a structural diagram of a network-side device according to another embodiment of this disclosure.
FIG. 8 is a structural diagram of a terminal device according to another illustrative embodiment of this disclosure not in accordance with the appended claims;
FIG. 9 is a structural diagram of a network-side device according to another illustrative embodiment of this disclosure not in accordance with the appended claims; and
FIG. 10 is a structural diagram of a network-side device according to another illustrative embodiment of this disclosure not in accordance with the appended claims.

### DESCRIPTION OF EMBODIMENTS

The following clearly and completely describes the technical solutions in the embodiments of this disclosure with reference to the accompanying drawings in the embodiments of this disclosure. Apparently, scope of the invention is defined by the scope of the appended claims.

In the specification and claims of this application, the terms such as "first" and "second" are intended to distinguish between similar objects but do not necessarily indicate a specific order or sequence. It should be understood that the numbers used in this way is interchangeable in appropriate circumstances so that the embodiments of this application described herein can be implemented in other orders than the order illustrated or described herein. Moreover, the terms "include", "have" and any other variants mean to cover the non-exclusive inclusion, for example, a process, method, system, product, or device that includes a list of steps or units is not necessarily limited to those units, but may include other units not expressly listed or inherent to such a process, method, product, or device. In addition, the use of "and/or" in this application means at least one of connected objects. For example, A and/or B and/or C means the following seven cases: A alone, B alone, C alone, both A and B, both B and C, both A and C, and all of A, B, and C.

For ease of understanding, the following describes some content related to the embodiments of this disclosure.

### new radio (New Radio, NR):

Main scenarios in NR include enhanced mobile broadband (Enhance Mobile Broadband, eMBB), massive machine type communication (massive Machine Type of Communication, mMTC) (also referred to as massive Internet of Things), ultra-reliable and low-latency communication (Ultra -Reliable and low latency Communications, URLLC). These scenarios impose requirements of high reliability, low latency, large bandwidth, and wide coverage for the system. Similarly, vehicle to everything (Vehicle to Everything, V2X) in NR also imposes requirements of high reliability and low latency.

Configured uplink grant in NR release 15 (Configured UL Grant in Rel.15 NR):
For requirements of low-latency services or periodic services, the NR supports uplink transmission of two uplink semi-persistent scheduling grants (configured UL grant): type 1 (Type1) and type 2 (Type2).

Configured UL grant type 1 (Configured UL Grant Type1): A resource of the configured UL grant type 1 (Configured UL Grant Type1) may be configured by using radio resource control (Radio Resource Control, RRC) signaling. After receiving the configuration, a terminal device may perform transmission on the resource based on arrival of its own service and a configuration status, not requiring downlink control information (Downlink Control Information, DCI) for dynamic scheduling.

Configured uplink UL grant type 2 (Configured UL Grant Type2): A resource of the configured uplink UL grant type 2 (Configured UL Grant Type2) may be semi-statically configured by using RRC signaling. After receiving the configuration, the terminal device cannot use the configuration directly. The terminal device can use the resource of the grant based on the activation DCI only after a network-side device (such as a base station) further activates the configuration by using DCI. The network-side device (such as the base station) may alternatively deactivate the configuration by using the DCI, and a terminal device receiving thee deactivation DCI stops using the resource of the grant.

It should be noted that a configured uplink grant (configured UL Grant) typically corresponds to a periodic resource that may be used for transmitting signals by user equipment (User Equipment, UE) (namely, a terminal device), and a plurality of transmission occasions may be included in each period.

Compared to conventional dynamic scheduling (Dynamic Grant), in the foregoing two manners, signaling overheads and interaction procedures can be reduced, thereby ensuring the low-latency requirements.

Sidelink grant in sidelink (which is also referred to as secondary link) of release 16 (Sidelink Grant in Rel.16 Sidelink):
A terminal device may communicate with other terminal devices on the sidelink (Sidelink), and the terminal devices may be usually vehicles supporting the V2X technology, roadside units (Road Site Unit, RSU), mobile terminals, or the like.

A transmission mode of a V2X terminal device may be classified into:
mode 1 (Mode 1): A base station may schedule or control a terminal device by using a Uu interface, for example, an interface between UE and UMTS terrestrial radio access network (UMTS Terrestrial Radio Access Network, UTRAN), to perform transmission on sidelink (Sidelink); and
mode 2 (Mode 2): The terminal device may not be controlled by the network-side device (such as the base station), and schedules itself to perform transmission on sidelink. Some terminal devices are able to schedule other V2X terminal devices to perform transmission on sidelink. The transmission may include as at least one of receiving or sending.

It should be noted that the two transmission modes are referred to as, not limited to, mode 1 (Mode 1) and mode 2 (Mode 2), or may be referred to other names, for example, transmission mode 1 and transmission mode 2, or type 1 and type 2. This is not limited in the embodiments.

Further, the network-side device may alternatively configure two types of sidelink (Sidelink) resources for V2X terminal devices.

Type A: A sidelink (Sidelink) resource is configured by using RRC signaling, with no need to send additional signaling for activation and or deactivation, where the resource configuration may be referred to as configured sidelink grant type 1 (configured Sidelink Grant Type1), which is not limited thereto.

Type B: A sidelink (Sidelink) resource is configured by using RRC signaling, and additional signaling needs to be sent to perform at least one of activation or deactivation on the resource. The resource configuration may be referred to as configured sidelink grant type 2 (configured Sidelink Grant Type2), which is not limited thereto.

In addition, dynamically scheduling/controlling the terminal device by the network-side device to perform sidelink transmission is also supported.

The following several scenarios may be supported for the foregoing sidelink (Sidelink):
An NR network-side device (such as a base station) controls an NR sidelink (Sidelink) terminal device: In this scenario, the NR network-side device may configure a type A resource and/or type B resource for the NR sidelink terminal device. The type A resource may be referred to as configured sidelink grant type 1 (configured Sidelink Grant Type 1), which is not limited thereto. The type B resource may be referred to as configured sidelink grant type 2 (configured Sidelink Grant Type 2), which is not limited thereto.

A long term evolution (Long Term Evolution, LTE) network-side device (such as a base station) controls an NR sidelink (Sidelink) terminal device: In this scenario, the LTE network-side device may configure a type A resource for the NR sidelink terminal device. The type A resource may be referred to as configured sidelink grant Type 1 (configured Sidelink Grant Type 1), which is not limited thereto.

An NR network-side device (such as a base station) controls an LTE sidelink (Sidelink) terminal device: In this scenario, the NR base station may configure a type A resource for the LTE sidelink terminal device. The type A resource may be referred to as configured sidelink grant type 1 (configured Sidelink Grant Type 1), which is not limited thereto.

It should be noted that, in the foregoing scenarios, signaling used for transmitting the sidelink grant type 1 (configured Sidelink Grant Type 1) may be different signaling, and signaling used for transmitting the sidelink grant type 2 (configured Sidelink Grant Type 2) may be different signaling.

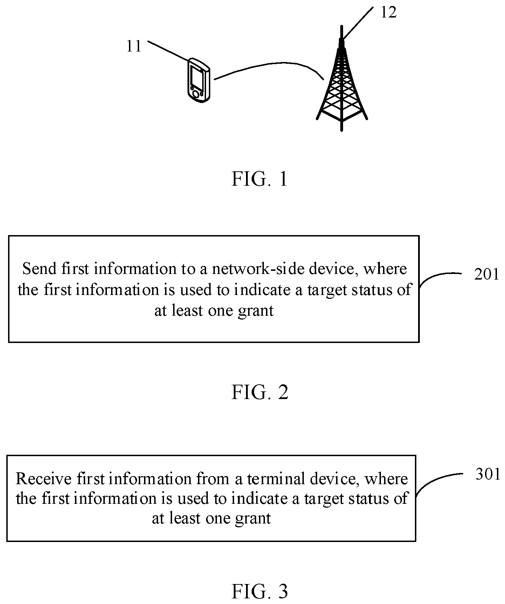

An embodiment of this disclosure provides an indication method. Referring to FIG. 1, FIG. 1 is a structural diagram of a network system to which the embodiments of this disclosure are applicable. As shown in FIG. 1, a terminal device 11 and a network-side device 12 are included. The terminal device 11 may be a user-side device such as a mobile phone, a tablet computer (Tablet Personal Computer), a laptop computer (Laptop Computer), a personal digital assistant (Personal Digital Assistant, PDA for short), a mobile Internet device (Mobile Internet Device, MID), or a wearable device (Wearable Device). It should be noted that a specific type of the terminal device 11 is not limited in the embodiments of this disclosure. The network-side device 12 may be a base station, such as a macro station, an LTE eNB, a 5G NR NB, or a gNB. The network-side device 12 may alternatively be a small cell, such as a low power node (Low Power Node, LPN), a pico, or a femto; or the network-side device 12 may be an access point (Access Point, AP). The base station may alternatively be a network node composed of a central unit (Central Unit, CU) and a plurality of TRPs managed and controlled by the central unit. It should be noted that a specific type of the network-side device 12 is not limited in the embodiments of this disclosure.

In this embodiment of disclosure, the terminal device 11 may send first information to the network-side device 12, where the first information may be used to explicitly or implicitly indicate a target status of at least one grant, and the target status includes at least one of the following states: a deactivated state or an activated state. The grant (Grant) may include a configured sidelink grant (configured Sidelink Grant) or configured uplink grant (configured UL grant) for the terminal device.

It should be noted that the first information may be notification information that is sent by the terminal device to the network-side device after the terminal device actively activates and/or deactivates the configured grant, or may be confirmation information that is fed back after activation and/or deactivation signaling sent by the network-side device is received.

In an implementation, activating or deactivating the grant may be controlled by the network-side device 12. Specifically, the network-side device 12 may first send first signaling to the terminal device 11, where the first signaling may be used to explicitly or implicitly indicate one of the following: activating the at least one grant; deactivating the at least one grant; and activating a first grant and deactivating a second grant, where the at least one grant includes at least two grants, and the first grant and the second grant are different grants of the at least two grants.

After receiving the first signaling, the terminal device 11 may send the first information to the network-side device 12. The first information may be confirmation information sent to the network-side device 12, so as to confirm to the network-side device 12 that the terminal device 11 has received the first signaling, thereby improving consistency of understanding on the resource between the terminal device and the network-side device.

In another implementation, the terminal device 11 may actively initiate activation and/or deactivate of the grant. Specifically, the terminal device 11 may send the first information to the network-side device 12, to notify (also referred to as inform or request) the network-side device 12 of at least one grant to be activated by the terminal device 11 or at least one grant to be deactivated by the terminal device 11; or notify the network-side device 12 of at least one grant that has been activated by the terminal device 11 or at least one grant that has been deactivated by the terminal device 11. It should be noted that the at least one grant to be activated and the at least one grant to be deactivated are different grants.

Optionally, in a case that the first information is used to notify the network-side device 12 of the at least one grant to be activated by the terminal device 11 or the at least one grant to be deactivated by the terminal device 11, the network-side device 12 may send second signaling to the terminal device 11 after receiving the first information. The second signaling may be used to indicate one of the following: activating part or all of the at least one grant; deactivating part or all of the at least one grant; and activating a third grant and deactivating a fourth grant, where the at least one grant includes at least two grants, and the third grant and the fourth grant are different grants in the at least two grants. This can improve consistency of understanding on the resource between the terminal device and the network-side device.

The following describes in detail the indication method provided in this embodiment of this disclosure.

An embodiment of this disclosure provides an indication method, applied to a terminal device. Referring to FIG. 2, FIG. 2 is a flowchart of an indication method according to an embodiment of this disclosure. As shown in FIG. 2, the method includes the following steps.

Step 201: Send first information to a network-side device.

The first information is used to indicate a target status of at least one grant, and the target status includes at least one of the following states: a deactivated state or an activated state.

In this embodiment of this disclosure, the at least one grant may be part or all of the grants configured for the terminal device. The grant is a configured sidelink grant (configured Sidelink Grant), a configured uplink grant (Configured UL Grant), or the like.

Optionally, the first information may be used to explicitly indicate a target status of the at least one grant, for example, the first information may carry the target status of the at least one grant. The first information carries a bitmap (Bitmap), and each bit of the bitmap corresponds to a status of one grant. The first information may also be used to implicitly indicate a target status of the at least one grant, for example, a resource for sending the first information has a correspondence relationship with the target status of the at least one grant. Therefore, based on the resource for sending the first information, the target status of the at least one grant may be learned.

It should be noted that the first information may also be used to explicitly or implicitly indicate the at least one grant, for example, the first information may carry an identifier of the at least one grant, or the resource for sending the first information has a correspondence relationship with the identifier of the at least one grant. Therefore, based on the resource for sending the first information, the identifier of the at least one grant may be learned.

In actual application, the terminal device may explicitly or implicitly indicate the target status of the at least one grant to the network-side device, thereby improving consistency of understanding on the resource between the terminal device and the network-side device. For example, in a case that the terminal device activates a specific grant, the first information is sent to the network-side device, to indicate to the network-side device that the grant is activated, so as to reduce the problem of mutual interference between different transmissions because the network-side device schedules the resource to other terminal devices. Alternatively, in a case that the terminal device deactivates a specific grant, the first information is sent to the network-side device, to indicate to the network-side device that the grant is deactivated, so as to reduce resource waste. It should be noted that the first information may be notification information that is sent by the terminal device after the terminal device actively activates and/or deactivates the configured grant to the network-side device, or may be confirmation information that is fed back after activation and/or deactivation signaling sent by the network-side device is received.

It should be noted that the terminal device may use the first information to indicate different grants that are activated and deactivated, for example, using the first information to indicate that the terminal device has activated a grant A and has deactivated a grant B.

In the indication method in this embodiment of this disclosure, the terminal device sends the first information to the network-side device, where the first information is used to indicate the target status of the at least one grant, and the target status includes at least one of the following states: a deactivated state or an activated state. This can improve consistency of understanding on the resource status between the terminal device and the network-side device, thereby reducing mutual interference between data transmissions, or reducing resource waste.

In actual application, activating or deactivating the grant may be controlled by the network-side device. That is, the terminal device first receives an activation and/or deactivation instruction sent by the network-side device, and may send confirmation information to the network-side device in response to the activation and/or deactivation instruction. For details, refer to the following content.

The method further includes:
receiving first signaling from the network-side device before sending first information to the network-side device; where
the first signaling is used to indicate one of the following:
   activating the at least one grant;
   deactivating the at least one grant; and
   activating a first grant and deactivating a second grant, where the at least one grant includes at least two grants, and the first grant and the second grant are different grants in the at least two grants.

In this embodiment of this disclosure, the terminal device may first receive the first signaling from the network-side device, and send the first information to the network-side device, so as to indicate the target status of the at least one grant to the network-side device, thereby improving consistency of understanding on the resource between the terminal device and the network-side device.

Optionally, the first information may be confirmation information, for example, a hybrid automatic repeat request acknowledgement (Hybrid Automatic Repeat request Acknowledgement, HARQ ACK), to indicate to the network-side device that the terminal device has received the first signaling, so as to further learn about the target status of the at least one grant. Specifically, in a case that the terminal device receives, from the network-side device, signaling for activating at least one grant (such as at least one sidelink grant), the terminal device may feed back the confirmation information, or in a case that the terminal device receives, from the network-side device, signaling for deactivating at least one grant, the terminal device may feed back the confirmation information; or in a case that the terminal device receives, from the network-side device, signaling for deactivating and activating different grants, the terminal device may feed back the confirmation information.

It should be noted that in this embodiment of this disclosure, the confirmation information may be fed back only in the case that the signaling for deactivating at least one grant is received from the network-side device, and the confirmation information may not be fed back in the case that the signaling for activating at least one grant is received from the network-side device; or, the confirmation information may be fed back only in the case that the signaling for activating at least one grant is received from the network-side device, and the confirmation information may not be fed back in the case that the signaling for deactivating at least one grant is received from the network-side device; or the confirmation information may be fed back both in the case that the signaling for deactivating at least one grant is received from the network-side device and in the case that the signaling for activating at least one grant is received from the network-side device.

Optionally, the confirmation information may further directly indicate the target status of the at least one grant. For example, the target status of the at least one grant may be indicated by a HARQ ACK resource, where different HARQ ACK resources may correspond to statuses of different grants.

The first signaling may explicitly indicate one of the following: activating the at least one grant; deactivating the at least one grant; and activating the first grant and deactivating the second grant. For example, the first signaling may carry a bitmap corresponding to a plurality of grants, 0 indicates deactivation, and 1 indicates activation. Alternatively, for another example, the first signaling may carry a bitmap corresponding to a plurality of grants, where 1 indicates deactivation, and 0 indicates activation. The first signaling may also implicitly indicate at least one of the foregoing. For example, a resource in the first signaling has a corresponding relationship with a status of the at least one grant, for example, a resource A in the first signaling corresponds to activating a grant A, and a resource B of the first signaling corresponds to deactivating a grant B.

Optionally, the first signaling may be DCI, a configured uplink grant (Configured UL grant), or the like. It should be noted that the at least one grant may be a sidelink grant in a case that the first signaling is an uplink grant.

It should be noted that in actual application, specific signaling may be set only to indicate activating at least one grant (Grant), for example, activation signaling, and the activation signaling is associated with at least one grant and is used to indicate activating the at least one grant. Alternatively, specific signaling may be set only to indicate deactivating at least one grant, for example, deactivation signaling, and the deactivation signaling is associated with at least one grant and is used to indicate deactivating the at least one grant. Alternatively, specific signaling may be set to indicate activating and/or deactivating different grants, for example, the signaling may carry a bitmap (Bitmap) corresponding to a plurality of grant. Each bit (Bit) corresponds to one grant, 0 indicates deactivation, and 1 indicates activation. If the bitmap is 0011, it indicates deactivating two grants associated with the first two bits and activating two grants associated with the last two bits. If the bit map is 0000, it indicates deactivating all associated grants; or if the bitmap is 1111, it indicates activating all associated grants. Alternatively, for example, the first signaling may carry a bitmap corresponding to a plurality of grants, where 1 indicates deactivation, and 0 indicates activation. If the bitmap is 0011, it indicates deactivating two grants associated with the last two bits and activating two grants associated with the first two bits. If the bit map is 0000, it indicates activating all associated grants; or if the bitmap is 1111, it indicates deactivating all associated grants.

In this embodiment of this disclosure, the first signaling is received from the network-side device, and the first information is sent to the network-side device, to indicate to the network-side device the target status of the at least one grant. This can improve consistency of understanding on the resource status between the terminal device and the network-side device, thereby reducing mutual interference between data transmissions, or reducing resource waste.

Optionally, the resource for sending the first information may include one of the following:
a first resource that is determined based on a reception time of the first signaling; and
a resource, indicated by the first signaling, for the first information.

In an implementation, the resource for sending the first information may be determined based on the reception time of the first signaling, that is, a transmission resource for the first information. For example, the first information may be fed back on a resource that is after N slots elapses since the reception time of the first signaling, where N may be predefined by the protocol, preconfigured, or configured by the network-side device. In this implementation, the transmission resource for the first information is determined based on the reception time of the first signaling, not requiring additional configurations, thereby reducing resources.

In another implementation, the first signaling may indicate the transmission resource for the first information, thereby improving flexibility in configuring the transmission resource for the first information.

It should be noted that the first signaling may indicate at least one of a time domain resource or a frequency-domain resource for the first information.

Optionally, the first resource may include one of the following:
a resource with a difference from the reception time being greater than or equal to first duration in time domain;
a resource, with a minimum difference from the reception time in time domain, in resources configured for the terminal device; and
a resource, with a maximum difference from the reception time in time domain or a difference being equal to second duration, in the resources configured for the terminal device.

In this embodiment of this disclosure, the first duration may be predefined by the protocol, preconfigured, or configured by the network-side device. In this embodiment of this disclosure, the second duration may be predefined or preconfigured by the protocol, or configured by the network-side device.

Optionally, the second duration may be determined based on a first parameter, where the first parameter may include at least one of the following: a capability of the terminal device, a frequency channel number, or a subcarrier spacing (Subcarrier Space, SCS).

In an implementation, the first resource may be a resource with a difference from the reception time being greater than or equal to the first duration in time domain, and a resource located after the reception time. In this way, a latency of transmission can be reduced, and reliability of transmission can be further improved. For example, in a case that the network-side device configures a periodic resource for the terminal device, the terminal device may send confirmation information on at least one available periodic resource that is after N periods elapse upon reception of the first signaling, where N periods may include a period in which the first signaling is located, or may start from a latest period after the first signaling. N may be predefined by the protocol, preconfigured, or configured by the network side.

In another implementation, the first resource may be a resource, with a minimum difference from the reception time in time domain, in resources configured for the terminal device, and a resource located after the reception time, that is, a resource, closest to the reception time in time domain, in the resources configured for the terminal device. In this way, the latency of the transmission can be reduced. For example, in the case that the network-side device configures a periodic resource for the terminal device, the terminal device may send confirmation information on an available periodic resource that is closest to the reception time point of the first signaling in time domain.

In another implementation, the first resource may be a resource, with a maximum difference from the reception time in time domain or a difference being equal to the second duration, in the resources configured for the terminal device, and a resource located after the reception time. For example, the first resource may be a resource, closest to a time point with a difference from the reception time in time domain satisfying the second duration, in the resources configured for the terminal device. In this way, a latency of transmission can be reduced, and reliability of transmission can be further improved. For example, in the case that the network-side device configures a periodic resource for the terminal device, after receiving the first signaling, the terminal device may send confirmation information on a resource, closest to a time point with a difference from the reception time of the first signaling in time domain being greater than a threshold T, where T may be predefined by the protocol, preconfigured, or configured by the network-side device.

It should be noted that the resource configured for the terminal device may be a periodic resource configured for the terminal device and used for uplink transmission, for example, a periodic uplink scheduling request (Scheduling Request, SR) resource. In this time, the confirmation information may be sent by using the SR.

Optionally, the first signaling may carry at least one of the following:
an identifier of the at least one grant;
a HARQ process identifier for the at least one grant;
a parameter having a correspondence relationship with the identifier of the at least one grant;
a parameter having a correspondence relationship with the HARQ process identifier for the at least one grant; or
a bitmap, where different bits in the bitmap are used to indicate activating or deactivating different grants in the at least one grant.

In this embodiment of this disclosure, the identifier of the grant may be a number or an ID for identifying a grant (such as a sidelink grant).

Using the at least one grant (Sidelink Grant) as an example, an identifier of the sidelink grant may be an index (Index) of the sidelink grant obtained through numbering sidelink grants, or one or more identifiers corresponding to the sidelink, for example, a destination ID (Destination ID), a source ID (Source ID), a group ID, an application layer ID, a service identifier, or IDs of other upper layers, or a transmission type (for example, multicast, broadcast, or multicast).

Each of the at least one grant may include one or more HARQ processes (HARQ Process). It should be noted that if different grants have different HARQ processes, the first signaling may carry only a HARQ process identifier (HARQ Process ID); otherwise, the first signaling needs to carry bother the HARQ process identifier (HARQ Process ID) and a grant identifier (Grant ID).

It should be noted that in a case that the first signaling carries the identifier of the at least one grant, the HARQ process identifier of the at least one grant, a parameter having a correspondence relationship with the identifier of the at least one grant, and a parameter having a correspondence relationship with the HARQ process identifier of the at least one grant, the target status of the at least one grant may be indicated in an implicit manner. For example, the resource in the first signaling is used to implicitly indicate the target status of the at least one grant. Resources in different first signaling may have a correspondence relationship with statuses of different grants. For example, resource A is used to indicate activating A and deactivating B, and resource B is used to indicate deactivating A and activating B. In a case that the first signaling carries a bitmap, the identifier of the at least one grant may be indicated in an implicit manner.

Optionally, in this embodiment of this disclosure, same signaling may be used to simultaneously indicate activation and/or deactivation of grants.

For example, the first signaling may carry a bitmap corresponding to at least two grants (such as sidelink grant). Each bit (bit) in the bitmap corresponds to one grant. If a bit is 0, it indicates deactivating a grant corresponding to the bit; if a bit is 1, it indicates activating a grant corresponding to the bit. Alternatively, if a bit is 0, it indicates activating a grant corresponding to the bit; if a bit is 1, it indicates deactivating a grant corresponding to the bit.

For example, the first signaling may carry two fields. A first field (or referred to as field A) may include a list of identifiers of grants that needs to be activated, and a second field (or field b) may include a list of identifiers of grants that needs to be deactivated. In this way, the terminal device may activate or deactivate different grants based on the two fields.

In this embodiment of this disclosure, different signaling may alternatively be used to separately indicate activating grants and deactivating grants. For example, activation signaling carries an identifier list corresponding to at least one grant, so as to indicate activating at least one grant; and deactivation signaling carries an identifier list corresponding to at least one grant, so as to indicate deactivating at least one grant.

Optionally, the resource in the first signaling may have a corresponding relationship with at least one of the following:
an identifier of the at least one grant;
a HARQ process identifier for the at least one grant; or
the target status of the at least one grant.

In this embodiment of this disclosure, the resource in the first signaling may have a corresponding relationship with the identifier of the at least one grant, so as to learn about the identifier of the at least one grant based on the resource in the first signaling. Different resources may correspond to identifiers of different grants, for example, resource A1 corresponds to a grant identifier A1 and a grant identifier B1, and resource B1 corresponds to the grant identifier B1 and a grant identifier C1.

The resource in the first signaling may have a corresponding relationship with the HARQ process identifier of the at least one grant, so as to learn about the HARQ process identifier of the at least one grant based on the resource in the first signaling. Different resources may correspond to different HARQ process identifiers, for example, resource A2 corresponds to a HARQ process identifier A2 and a HARQ process identifier B2, and resource B2 corresponds to the HARQ process identifier B2 and a HARQ process identifier C2.

The resource in the first signaling may further have a corresponding relationship with the target status of the at least one grant, so as to learn about the target status of the at least one grant based on the resource in the first signaling. Different resources may correspond to statuses of different grants, for example, resource A3 corresponds to activating a grant A3 and deactivating a grant B3, and resource B3 corresponds to activating the grant A3 and deactivating a grant C3.

It should be noted that the foregoing three parameters may be randomly combined based on actual requirements. For example, the resource in the first signaling may have a corresponding relationship with the identifier of the at least one grant and the target status of the at least one grant. For example, the resource in the first signaling may correspond to a grant identifier A1 and a grant identifier B1, where a state corresponding to the grant identifier A1 is an activated state and a state corresponding to the grant identifier A2 is a deactivated state. Specifically, a correspondence relationship between different resources and different grant identifiers and a correspondence relationship between different resources and statuses of different grants may be pre-established.

In this embodiment of this disclosure, the resource in the first signaling implicitly indicates at least one of the identifier of the at least one grant, the HARQ process identifier of the at least one grant, or the target status of the at least one grant, thereby reducing resources.

In actual application, the terminal device may actively initiate activating and/or deactivating grants, and notify the network-side device. For details, refer to the following content.

Optionally, the method may further include:
receiving second signaling from the network-side device after sending the first information to the network-side device; where
the second signaling is used to indicate one of the following:
   activating part or all of the at least one grant;
   deactivating part or all of the at least one grant; and
   activating a third grant and deactivating a fourth grant, where the at least one grant includes at least two grants, and the third grant and the fourth grant are different grants in the at least two grants.

In this embodiment of this disclosure, the terminal device may actively initiate activating and/or deactivating grants. Specifically, the terminal device may send the first information to the network-side device, where the first information may be used to indicate the target status of the at least one grant. After receiving the second signaling from the network-side device, the terminal device may activate and/or deactivate grants based on the second signaling, thereby improving consistency of understanding on the resource status between the terminal device and the network-side device.

Optionally, in this embodiment, the first information may be notification information, or may be referred to as informing information, request information, or the like, so as to indicate the target status of the at least one grant to the network-side device. For example, the terminal device may request the network-side device to activate at least one grant, or request the network-side device to deactivate at least one grant, or request the network-side device to activate and deactivate different grants in at least two grants.

In an implementation, the second signaling may be only confirmation information for confirming with the terminal device that the network-side device has received the first information. Specifically, the terminal device may activate and/or deactivate a corresponding grant based on the first information in a case that the second signaling is received. For example, if the first information is used to request deactivating grant A and activating grant B, the terminal device may deactivate the grant A and activate the grant B in the case that the second signaling is received. It should be noted that the terminal device may not activate and/or deactivate the grant in a case that the second signaling is not received.

In another implementation, based on the second signaling sent by the network-side device, the terminal device may also determine a grant that needs to be activated or deactivated. For details, refer to the following content.

Optionally, the second signaling may carry at least one of the following:
identifiers of at least part of the at least one grant;

HARQ process identifiers of at least part of the at least one grant;
parameters having a correspondence relationship with identifiers of at least part of the at least one grant;
parameters having a correspondence relationship with HARQ process identifiers of at least part of the at least one grant; or
a bitmap, where different bits in the bitmap are used to indicate activating or deactivating different grants in at least part of the at least one grant.

In one implementation, the second signaling may indicate a grant that cannot be activated. For example, the first information is used to request activating a grant A and activating a grant B. If the second signaling carries an identifier of the grant A, it indicates that the grant A cannot be activated.

Alternatively, in this implementation, first prohibition duration may be predefined by the protocol or configured by the network-side device. In the first prohibition duration, the terminal device cannot activate one or more grants. For example, if the second signaling carries the identifier of the grant A, the grant A cannot be activated in the first prohibition duration.

In another implementation, the second signaling may indicate a grant that can be activated. For example, the first information is used to request activating a grant A and activating a grant B. If the second signaling carries an identifier of the grant A, it indicates that the grant A can be activated.

Alternatively, in this implementation, second prohibition duration may be predefined by the protocol or configured by the network-side device. In the second prohibition duration, the terminal device cannot activate one or more grants. For example, if the second signaling carries the identifier of the grant A, the sidelink grant B cannot be activated in the second prohibition duration.

It should be noted that the second signaling may simultaneously indicate a grant that cannot be activated and a grant that can be activated, for example, one field is used to indicate a grant that cannot be activated, and the other field is used to indicate a grant that can be activated.

In another implementation, the second signaling may further indicate activating and/or deactivating a grant other than the at least one grant. For example, the first information is used to request activating a grant A and activating a grant B. If the second signaling carries an identifier of a grant C, it indicates that the grant A, grant B, grant C can be activated.

Optionally, the resource in the second signaling may have a corresponding relationship with at least one of the following:
identifiers of at least part of the at least one grant;
HARQ process identifiers of at least part of the at least one grant; or
statuses of at least part of the at least one grant.

In this embodiment of this disclosure, different resources may correspond to at least one of identifiers of different grants, different HARQ process identifiers, or statuses of different grants. For example, a resource A1 corresponds to a grant identifier A1 and a grant identifier B1, and a resource B1 corresponds to the grant identifier B1 and a grant identifier C1; or a resource A2 corresponds to a HARQ process identifier A2 and a HARQ process identifier B2, and a resource B2 corresponds to a grant identifier B2 and a grant identifier C2; or a resource A3 corresponds to activating a grant A3 and deactivating a grant B3, and a resource B3 corresponds to activating the grant A3 and deactivating a grant C3; and so on.

For another example, the resource A1 corresponds to the grant identifier A1 and the grant identifier B1, where a state corresponding to the grant identifier A1 is an activated state, and a state corresponding to the grant identifier B1 is a deactivated state; or the resource B1 corresponds to the grant identifier A1 and the grant identifier C1, where a state corresponding to the grant identifier A1 is an activated state, and a state corresponding to the grant identifier C1 is an activated state.

In this embodiment of this disclosure, the resource in the second signaling implicitly indicates at least one of identifiers of at least part of the at least one grant, HARQ process identifiers of at least part of the at least one grant, or statuses of at least part of the at least one grant, thereby reducing resources.

Optionally, the first information may be transmitted by using one of the following:
a HARQ ACK;
an SR;
a media access control control element (Media Access Control Control Element, MAC CE);
a buffer status report (Buffer Status Report, BSR);
a reference signal (Reference Signal, RS); and
a preamble (Preamble).

In this embodiment of this disclosure, different RS sequences may correspond to at least one of different grants or different grant states. For example, an RS sequence a may correspond to activating the grant A, and an RS sequence b may correspond to deactivating the grant B, and an RS sequence c may correspond to activating the grant A and activating the grant B. In this way, a grant and a status of the grant may be implicitly indicated based on the RS sequence.

Optionally, different RS resources may also correspond to at least one of different grants or different grant states. For example, an RS resource a may correspond to activating a grant A, and an RS resource c may correspond to activating the grant A and activating a grant B. In this way, a grant and a status of the grant may be implicitly indicated based on the RS resource.

Optionally, different RS resources and different RS sequence combinations may also correspond to at least one of different grants or different grant states. For example, an RS sequence a and an RS resource a may correspond to deactivating a grant B; and an RS sequence b and an RS resource b may correspond to activating the grant B and activating a grant C.

Optionally, different preamble sequences may correspond to at least one of different grants or different grant states. For example, a preamble sequence a may correspond to activating the grant A; a preamble sequence b may correspond to deactivating the grant B; and a preamble sequence c may correspond to activating the grant A and activating the grant B. In this way, a grant and a status of the grant may be implicitly indicated based on the preamble sequence. It should be noted that the preamble may be a dedicated preamble. Specifically, the network-side device may allocate a dedicated preamble to the terminal device, so that the terminal device notifies the network-side device that the terminal device has performed activation and/or deactivation.

Optionally, different target resources may correspond to at least one of different grants or different grant states.

The target resource includes one of the following: a HARQ ACK resource, an SR resource, a MAC CE resource, and a BSR resource.

That is, different HARQ ACK resources may correspond to at least one of different grants or different grant states; different SR resources may correspond to at least one of different grants or different grant states; different SR resources can correspond to at least one of different grants or different grant states; different MAC CE resources may correspond to at least one of different grants or different grant states; and different BSR resources may correspond to at least one of different grants or different grant states.

Optionally, in this embodiment of this disclosure, the terminal device may alternatively first send request information to the network-side device, to request activating and/or deactivating at least one grant; and after receiving activation and/or deactivation signaling sent by the network-side device, further sends, to the network-side device, acknowledge information that the activation and/or deactivation signaling has been received.

Optionally, the terminal device may further report assistance information to the network-side device, such as one or more of status information, capability information, and packet loss information of the terminal device, so as to trigger the network-side device to reconfigure a grant by using RRC, or to trigger the network-side device to reactivate a grant by using DCI or reconfigure a grant by using DCI.

An embodiment of this disclosure provides an indication method, applied to a network-side device. Referring to FIG. 3, FIG. 3 is a flowchart of an indication method according to an embodiment of this disclosure. As shown in FIG. 3, the method includes the following steps.

Step 301: Receive first information from a terminal device.

The first information is used to indicate a target status of at least one grant, and the target status includes at least one of the following states: a deactivated state or an activated state.

In this embodiment of this disclosure, the at least one grant may be part or all of the grants configured for the terminal device. The grant may be a configured sidelink grant (configured Sidelink Grant), a configured uplink grant (Configured UL Grant), or the like.

Optionally, the first information may be used to explicitly indicate a target status of the at least one grant, for example, the first information may carry the target status of the at least one grant. For example, the first information may carry a bitmap (Bitmap), and each bit of the bitmap corresponds to a status of one grant. The first information may also be used to implicitly indicate a target status of the at least one grant, for example, a resource for sending the first information has a correspondence relationship with the target status of the at least one grant. Therefore, based on the resource for sending the first information, the target status of the at least one grant may be learned.

It should be noted that the first information may also be used to explicitly or implicitly indicate the at least one grant, for example, the first information may carry an identifier of the at least one grant, or the resource for sending the first information has a correspondence relationship with the identifier of the at least one grant. Therefore, based on the resource for sending the first information, the identifier of the at least one grant may be learned.

In the indication method in this embodiment of this disclosure, the network-side device receives the first information from the terminal device, where the first information is used to indicate the target status of the at least one grant, and the target status includes at least one of the following states: a deactivated state or an activated state. This can improve consistency of understanding on the resource status between the terminal device and the network-side device, thereby reducing mutual interference between data transmissions, or reducing resource waste.

In actual application, activating or deactivating the grant may be controlled by the network-side device. That is, the network-side device first sends an activation and/or deactivation instruction to the terminal device, and receives confirmation information from the terminal device. For details, refer to the following content.

The method further includes:
sending first signaling to the terminal device before the receiving first information from the terminal device; where
the first signaling is used to indicate one of the following:
   activating the at least one grant;
   deactivating the at least one grant; and
   activating a first grant and deactivating a second grant, where the at least one grant includes at least two grants, and the first grant and the second grant are different grants in the at least two grants.

In this embodiment of this disclosure, the network-side device may send the first signaling to the terminal device, and receive the first information from the terminal device, so that the network-side device can determine the target status of the at least one grant based on the first information, thereby improving consistency of understanding on the resource between the terminal device and the network-side device.

Optionally, the first information may be confirmation information, for example, a HARQ ACK. In this way, in a case that the confirmation information is received, the network-side device may confirm that the terminal device has received the first signaling, so as to further learn about the target status of the at least one grant.

Optionally, the confirmation information may further directly indicate the target status of the at least one grant. For example, the target status of the at least one grant may be indicated by a HARQ ACK resource, where different HARQ ACK resources may correspond to statuses of different grants.

The first signaling may explicitly indicate one of the following: activating the at least one grant; deactivating the at least one grant; and activating the first grant and deactivating the second grant. For example, the first signaling may carry a bitmap corresponding to a plurality of grants, 0 indicates deactivation, and 1 indicates activation. Alternatively, for another example, the first signaling may carry a bitmap corresponding to a plurality of grants, where 1 indicates deactivation, and 0 indicates activation. The first signaling may also implicitly indicate at least one of the foregoing. For example, a resource in the first signaling has a corresponding relationship with a status of the at least one grant, for example, a resource A in the first signaling corresponds to activating a grant A, and a resource B of the first signaling corresponds to deactivating a grant B.

Optionally, the first signaling may be DCI, an uplink grant (UL Grant), or the like. It should be noted that the at least one grant may be a sidelink grant in a case that the first signaling is an uplink grant.

In this embodiment of this disclosure, the network-side device sends the first signaling to the terminal device, and receives the first information from the terminal device, so that the network-side device can learn about the target status of the at least one grant based on the first information, thereby improving consistency of understanding on the resource status between the terminal device and the network-side device, thereby reducing mutual interference between data transmissions, or reducing resource waste.

Optionally, after the sending the first signaling to the terminal device, the method may further include at least one of the following:
in a case that the first information is successfully received, determining that the terminal device has received the first signaling; or
in a case that the first information has not been successfully received, determining that the terminal device has not received the first signaling.

In this embodiment of this disclosure, in a case that the first information is received, the network-side device may determine whether the terminal device has received the first signaling; or may determine whether the terminal device has successfully parsed the first signaling, or may determine whether the terminal device has successfully activated and/or deactivated the at least one grant; and so on.

In a case that the first information is not received, the network-side device determines whether the terminal device has not received the first signaling; or may determine whether the terminal device has not successfully parsed the first signaling, or may determine whether the terminal device has not successfully activated and/or deactivated the at least one grant; and so on.

Optionally, in the case that the network-side device configures a periodic resource for the terminal device, whether the terminal device has not received the first signaling may be determined in the following three manners.

Implementation manner 1: If the network-side device does not receive confirmation information within N periods after transmission of the first signaling (such as DCI), it may be considered that the terminal device fails to receive the first signaling, or that the terminal device fails to parse the first signaling, or fails in activation/deactivation. If the confirmation information is received, it is considered that the terminal device has received the first signaling, or that the terminal device has successfully parsed the first signaling, or has successfully performed activation/deactivation. The N periods may include a period in which the first signaling is located, or may start from a latest period after the first signaling, where N may be predefined by the protocol, preconfigured, or configured by the network-side device.

Implementation manner 2: If the network-side device sends the first signaling, but does not receive confirmation information on a periodic resource closest to the first signaling, it is considered that the terminal device fails to receive the first signaling, or that the terminal device fails to parse the first signaling, or fails in activation/deactivation. If the confirmation information is received on the periodic resource closest to the first signaling, it is considered that the terminal device has received the first signaling, or that the terminal device has successfully parsed the first signaling, or has successfully performed activation/deactivation.

Implementation manner 3: If the network-side device sends the first signaling, but does not receive confirmation information on a periodic resource, closest to a time point with a difference from the transmitting time of the first signaling in time domain being greater than a threshold T, it is considered that the terminal device fails to receive the first signaling, or that the terminal device fails to parse the first signaling, or fails in activation/deactivation. If the network-side device receives the confirmation information, it is considered that the terminal device has received the first signaling, or that the terminal device has successfully parsed the first signaling, or has successfully performed activation/deactivation. T may be predefined by the protocol, preconfigured, or configured by the network-side device.

Optionally, after the sending the first signaling to the terminal device, the method may further include:
starting a target timer; and
in a case that the target timer expires, determining that the first information has not been successfully received.

In this embodiment of this disclosure, the network-side device may alternatively initiate the target timer after sending the first signaling, where duration of the target timer may be predefined by the protocol, or may be configured by the network-side device. In the case that the target timer expires, it can be determined that the first information has not been successfully received, or the first signaling has not been successfully parsed, or activating/deactivating the at least one grant has not been successfully performed, or the like.

In this embodiment of this disclosure, it is determined, based on the target timer, whether the first information is received, simple in implementation.

Optionally, the method may further include:
in a case that the first information is received during running of the target timer, stopping the target timer.

Optionally, the first signaling further indicates a transmission resource for the first information.

Optionally, the first signaling may carry at least one of the following:
an identifier of the at least one grant;
a HARQ process identifier for the at least one grant;
a parameter having a correspondence relationship with the identifier of the at least one grant;
a parameter having a correspondence relationship with the HARQ process identifier for the at least one grant; or
a bitmap, where different bits in the bitmap are used to indicate activating or deactivating different grants in the at least one grant.

Optionally, the resource in the first signaling has a corresponding relationship with at least one of the following:
an identifier of the at least one grant;
a HARQ process identifier for the at least one grant; or
the target status of the at least one grant.

In actual application, the terminal device may actively initiate activating and/or deactivating grants, and notify the network-side device. For details, refer to the following content.

Optionally, after the first information is received from the terminal device, second signaling is sent to the terminal device.

The second signaling is used to indicate one of the following:
activating part or all of the at least one grant;
deactivating part or all of the at least one grant; and
activating a third grant and deactivating a fourth grant, where the at least one grant includes at least two grants, and the third grant and the fourth grant are different grants in the at least two grants.

In this embodiment of this disclosure, the terminal device may actively initiate activating and/or deactivating grants. Specifically, the network-side device may receive the first information from the terminal device and send the second signaling to the terminal device. The first information may be used to indicate the target status of the at least one grant. In this way, the terminal device may activate and/or deactivate the grant based on the second signaling, thereby improving consistency of understanding on the resource between the terminal device and the network-side device.

Optionally, in this embodiment, the first information may be notification information, or may be referred to as informing information, request information, or the like, so as to indicate the target status of the at least one grant to the network-side device.

In an implementation, the second signaling may be only confirmation information for confirming with the terminal device that the network-side device has received the first information. Specifically, the terminal device may activate and/or deactivate a corresponding grant based on the first information in a case that the second signaling is received. For example, if the first information is used to request deactivating grant A and activating grant B, the terminal device may deactivate the grant A and activate the grant B in the case that the second signaling is received. It should be noted that the terminal device may not activate and/or deactivate the grant in a case that the second signaling is not received.

In another implementation, based on the second signaling sent by the network-side device, the terminal device may also determine a grant that needs to be activated or deactivated.

Optionally, the second signaling may carry at least one of the following:
identifiers of at least part of the at least one grant;
HARQ process identifiers of at least part of the at least one grant;
parameters having a correspondence relationship with identifiers of at least part of the at least one grant;
parameters having a correspondence relationship with HARQ process identifiers of at least part of the at least one grant; or
a bitmap, where different bits in the bitmap are used to indicate activating or deactivating different grants in at least part of the at least one grant.

Optionally, the resource in the second signaling may have a corresponding relationship with at least one of the following:
identifiers of at least part of the at least one grant;
HARQ process identifiers of at least part of the at least one grant; or
statuses of at least part of the at least one grant.

Optionally, the first information may be transmitted by using one of the following:
a hybrid automatic repeat request acknowledgment HARQ ACK;
an uplink scheduling request SR;
a media access control control element MAC CE;
a buffer status report BSR;
a reference signal RS; and
a preamble.

In this embodiment of this disclosure, different RS sequences may correspond to at least one of different grants or different grant states. For example, an RS sequence a may correspond to activating the grant A, and an RS sequence b may correspond to deactivating the grant B, and an RS sequence c may correspond to activating the grant A and activating the grant B. In this way, a grant and a status of the grant may be implicitly indicated based on the RS sequence.

Optionally, different RS resources may also correspond to at least one of different grants or different grant states. For example, an RS resource a may correspond to activating a grant A, and an RS resource c may correspond to activating the grant A and activating a grant B. In this way, a grant and a status of the grant may be implicitly indicated based on the RS sequence resource.

Optionally, different RS resources and different RS sequence combinations may also correspond to at least one of different grants or different grant states. For example, an RS sequence a and an RS resource a may correspond to deactivating a grant B; and an RS sequence b and an RS resource b may correspond to activating the grant B and activating a grant C.

Optionally, different preamble sequences may correspond to at least one of different grants or different grant states. For example, a preamble sequence a may correspond to activating the grant A; a preamble sequence b may correspond to deactivating the grant B; and a preamble sequence c may correspond to activating the grant A and activating the grant B. In this way, a grant and a status of the grant may be implicitly indicated based on the preamble sequence. It should be noted that the preamble may be a dedicated preamble. Specifically, the network-side device may allocate a dedicated preamble to the terminal device, so that the terminal device notifies the network-side device that the terminal device has performed activation and/or deactivation.

Optionally, different target resources may correspond to at least one of different grants or different grant states.

The target resource includes one of the following: a HARQ ACK resource, an SR resource, a MAC CE resource, and a BSR resource.

That is, different HARQ ACK resources may correspond to at least one of different grants or different grant states; different SR resources may correspond to at least one of different grants or different grant states; different SR resources can correspond to at least one of different grants or different grant states; different MAC CE resources may correspond to at least one of different grants or different grant states; and different BSR resources may correspond to at least one of different grants or different grant states.

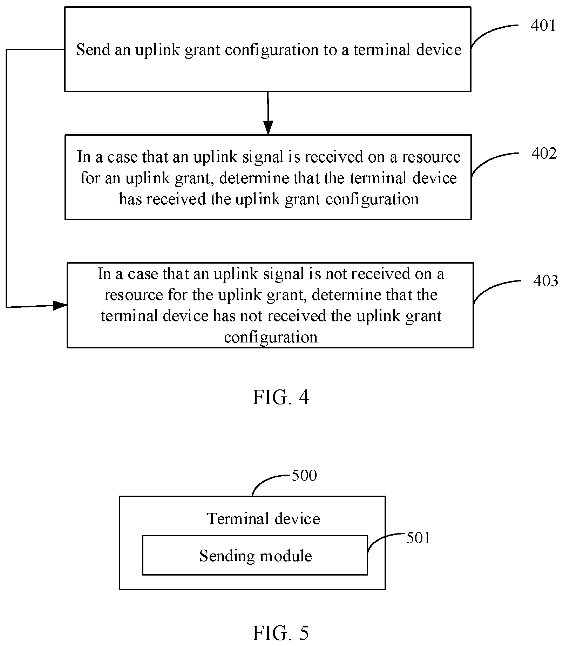

An embodiment of this disclosure further provides an indication method, applied to a network-side device. Referring to FIG. 4, FIG. 4 is a flowchart of an indication method according to an embodiment of this disclosure. As shown in FIG. 4, the method includes the following steps.

Step 401: Send an uplink grant configuration to a terminal device, where the uplink grant configuration is used to indicate one of the following: activating at least one grant; deactivating at least one grant; and activating a fifth grant and deactivating a sixth grant, where the fifth grant and the sixth grant are different grants in at least two grants.

In this embodiment of this disclosure, the network-side device may use a configured uplink grant (configured UL grant) to indicate activating and/or deactivating the at least one grant. In this way, if receiving an uplink grant configuration, the terminal device may send an uplink signal (UL signal) on an uplink grant resource.

Optionally, in this embodiment of this disclosure, time domain resources and/or frequency domain resources of different uplink grants may correspond to different grants and/or different grant statuses; or the uplink grant configuration may carry a parameter or field to indicate a grant and/or a status of a sidelink grant.

Step 402: In a case that an uplink signal is received on a resource for an uplink grant, determine that the terminal device has received the uplink grant configuration.

In this step, if the network-side device receives an uplink signal on a resource for the uplink grant, it indicates that the terminal device has received the uplink grant configuration, or has successfully parsed the uplink grant configuration, or has successfully activated and/or deactivated the at least one grant, so that the terminal device can implicitly feed back confirmation information.

Step 403: In a case that an uplink signal is not received on the resource for the uplink grant, determine that the terminal device has not received the uplink grant configuration.

In this step, if the network-side device does not receive an uplink signal on the resource for the uplink grant, it indicates that the terminal device fails to receive the uplink grant configuration, or has not successfully parsed the uplink grant configuration, or has not successfully activated and/or deactivated the at least one grant.

This embodiment of this disclosure is described below with reference to examples.

Example 1: The base station use a configured uplink grant (configured UL grant) to indicate deactivating sidelink. If the base station receives an uplink signal (UL signal) the uplink grant resource, it indicates that the terminal device has received the deactivation signaling.

Optionally, if at least one UL signal is received on K consecutive transmission occasions starting from the first time point, deactivation is successful, where the first time point may be a transmission time point of the configured uplink grant to a start time point indicated by the configured uplink grant. Alternatively, if at least one UL signal is received on the resource for the uplink grant in M configured uplink grant (configured UL Grant) periods from the first time point, the deactivation is successful. Alternatively, if at least one UL signal is received on the resource for the uplink grant within a corresponding first timer, the deactivation is successful, and the first timer is turned off. K and M are positive integers.

If no UL signal is received in K consecutive transmission occasions starting from the first time point, or no UL signal is received on the resource for the uplink grant within the M configured uplink grant (configured UL Grant) periods starting from the first time point, or a corresponding first timer expires, the deactivation fails.

Example 2: The base station use a configured uplink grant to indicate activating sidelink. If the base station receives an uplink signal (UL signal) the uplink grant resource, it indicates that the terminal device has received the activation signaling.

Optionally, if at least one UL signal is received on K consecutive transmission occasions starting from the first time point, activation is successful, where the first time point may be a transmission time point of the configured uplink grant to a start time point indicated by the configured uplink grant. Alternatively, if at least one UL signal is received on the resource for the uplink grant in M configured uplink grant (configured UL Grant) periods from the first time point, the activation is successful. Alternatively, if at least one UL signal is received on the resource for the uplink grant within a corresponding second timer, the activation is successful, and the second timer is turned off. K and M are positive integers.

If no UL signal is received in K consecutive transmission occasions starting from the first time point, or no UL signal is received on the resource for the uplink grant within the M configured uplink grant (configured UL Grant) periods starting from the first time point, or a corresponding second timer expires, the activation fails.

In this embodiment of this disclosure, the configured uplink grant is used to indicate activating and/or deactivating the at least one grant, so as to determine, based on whether the uplink signal is received on the resource for the uplink grant, whether the terminal device receives the uplink grant configuration, thereby implementing implicit feedback of confirmation information by the terminal device. This can improve consistency of understanding on the resource status between the terminal device and the network-side device, thereby reducing mutual interference between data transmissions, or reducing resource waste.

This embodiment of this disclosure is described below with reference to examples.

Example 1: The base station indicates activating and/or deactivating a sidelink grant by using DCI.

Specifically, the following steps may be included:
Step a1: The base station indicates activating and/or deactivating a sidelink grant (Sidelink Grant) by using DCI.
Step a2: The terminal device feeds back confirmation information after receiving the DCI.

In this embodiment, that the base station indicates activating and/or deactivating a sidelink grant by using DCI may include the following three implementations:
Implementation 1: One piece of DCI indicates activating one sidelink grant.
   If receiving the DCI, the terminal device may feed back the confirmation information, where the confirmation information may be a HARQ ACK. In this case, the terminal device may activate the grant.
Implementation 2: One piece of DCI indicates deactivating one sidelink grant.
   If receiving the DCI, the terminal device may feed back the confirmation information, where the confirmation information may be a HARQ ACK. In this case, the terminal device may deactivate the sidelink grant.
Implementation 3: One piece of DCI indicates activating and/or deactivating a plurality of sidelink grants.
   If receiving the DCI, the terminal device may feed back the confirmation information, where the confirmation information may be a HARQ ACK. In this case, the terminal device may separately activate and/or deactivate a corresponding sidelink grant according to the DCI. For example, the DCI indicates activating a sidelink grant A and deactivating a sidelink grant B, and then the terminal device may activate the sidelink grant A and deactivate the sidelink grant B.

Optionally, the terminal device may send confirmation information in time t after receiving the DCI. The time t may be predefined by the protocol, or preconfigured, or configured by the network-side device.

Optionally, the DCI may also carry a resource configuration corresponding to confirmation information of the DCI, and the terminal device feeds back the confirmation information on the resource after receiving the DCI.

Optionally, in a case that the network-side device configures a periodic service for the terminal device, the terminal device may feed back the confirmation information in one for the following implementation manners:

Implementation manner 1: The terminal device may send the confirmation information on at least one available periodic resource that is after N periods elapse upon reception of the DCI, where the N periods may include a period in which the DCI is located, or may start from a latest period after the DCI. N may be predefined by the protocol, preconfigured, or configured by the network side.

Correspondingly, if the network-side device does not receive the confirmation information within N periods after transmission of the DCI, it may be considered that the terminal device fails to receive the DCI, or that the terminal device fails to parse the DCI or fails in activation/deactivation. If the confirmation information is received, it is considered that the terminal device has received the DCI, or that the terminal device has successfully parsed the DCI, or has successfully performed activation/deactivation. The N periods may include a period in which the DCI is located, or may start from a latest period after the DCI, where N may be predefined by the protocol, preconfigured, or configured by the network side.

Implementation manner 2: The terminal device may send confirmation information on an available periodic resource that is closest to the reception time point of the DCI in time domain.

Correspondingly, if the network-side device sends the DCI, but does not receive confirmation information on a periodic resource closest to the DCI, it is considered that the terminal device fails to receive the DCI, or that the terminal device fails to parse the DCI, or fails in activation/deactivation. If the network-side device receives the confirmation information on the periodic resource closest to the DCI, it is considered that the terminal device has received the DCI, or that the terminal device has successfully parsed the DCI, or has successfully performed activation/deactivation.

Implementation manner 3: In the case that the network-side device configures a periodic resource for the terminal device, after receiving the DCI, the terminal device may send confirmation information on a resource, closest to a time point with a difference from the reception time point of the DCI in time domain being greater than a threshold T, where T may be predefined by the protocol, preconfigured, or configured by the network-side device.

Correspondingly, if the network-side device sends the DCI, but does not receive confirmation information on a periodic resource, closest to a time point with a difference from the transmitting time of the DCI in time domain being greater than a threshold T, it is considered that the terminal device fails to receive the DCI, or that the terminal device fails to parse the DCI, or fails in activation/deactivation. If the network-side device receives the confirmation information, it is considered that the terminal device has received the DCI, or that the terminal device has successfully parsed the DCI, or has successfully performed activation/deactivation. T may be predefined by the protocol, preconfigured, or configured by the network-side device.

Optionally, the base station may initiate a timer (Timer) after sending the DCI. If the timer expires, it is considered that the terminal device fails to receive the DCI, or that the terminal device fails to parse the DCI, or fails in activation/deactivation. If the network-side device receives the confirmation information during running of the timer, it is considered that the terminal device has received the DCI, or that the terminal device has successfully parsed the DCI, or has successfully performed activation/deactivation; and the timer is stopped.

It should be noted that this embodiment provides description by using an example in which the first signaling is DCI, and the confirmation information (first information) is a HARQ ACK. This embodiment is also applicable to confirmation information in other forms, such as an SR, an RS, a MAC CE, a BSR, an RS, or a dedicated preamble (Preamble).

Example 2: The base station may use a configured uplink grant (configured UL grant) to indicate activating and/or deactivating a sidelink grant, which may specifically include the following implementation manners.

Implementation manner 1: The base station may use a configured uplink grant (configured UL grant) to indicate deactivating a sidelink grant, which may specifically include the following steps.

Step b1: The base station may use a configured uplink grant (configured UL grant) to indicate deactivating the sidelink grant.

Step b2: The terminal device sends an uplink signal on the resource for the uplink grant after receiving the uplink grant (UL Grant) configuration.

Specifically, if the base station receives the uplink signal (UL signal) on the resource for the uplink grant, it indicates that the terminal device has received the deactivation signaling, so that the terminal device implicitly feeds back confirmation information.

Optionally, if at least one UL signal is received on K consecutive transmission occasions starting from the first time point, deactivation is successful, where the first time point may be a transmission time point of the configured uplink grant to a start time point indicated by the configured uplink grant. Alternatively, if at least one UL signal is received on the resource for the uplink grant in M configured uplink grant (configured UL Grant) periods from the first time point, the deactivation is successful. Alternatively, if at least one UL signal is received on the resource for the uplink grant within a corresponding first timer, the deactivation is successful, and the first timer is turned off. K and M are positive integers.

If no UL signal is received in K consecutive transmission occasions starting from the first time point, or no UL signal is received on the resource for the uplink grant within the M configured uplink grant (configured UL Grant) periods starting from the first time point, or a corresponding first timer expires, the deactivation fails.

Implementation manner 2: The base station may use a configured uplink grant (configured UL grant) to indicate activating a sidelink grant, which may specifically include the following steps.

Step c1: The base station may use a configured uplink grant (configured UL grant) to indicate activating the sidelink grant.

Step c2: The terminal device sends an UL signal on the uplink grant resource after receiving the uplink grant configuration.

Specifically, if the base station receives the uplink signal (UL signal) on the resource for the uplink grant, it indicates that the terminal device has received the activation signaling, so that the terminal device implicitly feeds back confirmation information.

Optionally, if at least one UL signal is received on K consecutive transmission occasions starting from the first time point, activation is successful, where the first time point may be a transmission time point of the configured uplink grant to a start time point indicated by the configured uplink grant. Alternatively, if at least one UL signal is received on the resource for the uplink grant in M configured uplink grant (configured UL Grant) periods from the first time point, the activation is successful. Alternatively, if at least one UL signal is received on the resource for the uplink grant within a corresponding second timer, the activation is successful, and the second timer is turned off. K and M are positive integers.

If no UL signal is received in K consecutive transmission occasions starting from the first time point, or no UL signal is received on the resource for the uplink grant within the M configured uplink grant (configured UL Grant) periods starting from the first time point, or a corresponding second timer expires, the activation fails.

Optionally, in this embodiment, for the foregoing implementation manner 1 and implementation manner 2, time domain resources and/or frequency domain resources of different configured uplink grants (configured UL Grant) may correspond to different sidelink grants and/or different sidelink grant statuses; or the configured uplink grant configuration carries a parameter or field to indicate a sidelink grant and/or a status of a sidelink grant.

Specifically, using the uplink grant configuration to indicate activating and/or deactivating the sidelink grant may include one of the following:
one uplink grant configuration is used for activation or deactivation, where the uplink grant configuration carries an identifier (Index) of a related sidelink grant; and
one uplink grant configuration may be used for activating and deactivating different sidelink grants; in this case, the uplink grant configuration carries one bitmap, and each bit in the bitmap corresponds to one sidelink grant.

Optionally, the foregoing scheme may be implemented by using a configured uplink grant type 1 (configured UL grant type1).

Example 3: The base station sends signaling to indicate activating and/or deactivating a configured sidelink grant.

In this embodiment, one piece of signaling may be associated with one sidelink grant, where the signaling is used to indicate activating or deactivating the one sidelink grant. It should be noted that two pieces of signaling may indicate activation and deactivation, respectively.

Optionally, one piece of signaling may be associated with one sidelink grant in the following manners:
1. Being explicitly associated, which may include:
   carrying an identifier of a sidelink grant in the signaling.
2. Being implicitly associated, which may include at least one of the following:
   a correspondence relationship between the resource in the signaling and the identifier of the sidelink grant; or
   a correspondence relationship between at least one parameter carried in the signaling and the identifier of the sidelink grant.

Optionally, the base station may send signaling to indicate activating or deactivating at least one HARQ process of the configured sidelink grant.

Specifically, one piece of signaling may be associated with at least one HARQ process of the sidelink grant, where the one piece of signaling may be associated with the at least one HARQ process of the sidelink grant in the following manners:
1. Being explicitly associated, which may include:
   carrying an identifier of a HARQ process in the signaling.
2. Being implicitly associated, which may include at least one of the following:
   a correspondence relationship between the resource in the signaling and the identifier of the HARQ process; or
   a correspondence relationship between at least one parameter carried in the signaling and the identifier of the HARQ process.

It should be noted that if different grants have different HARQ processes, only the identifier of the HARQ process may be carried; otherwise, the identifier of the HARQ process and the identifier of the grant need to be carried.

Example 4: The base station sends signaling to indicate activating and/or deactivating a configured sidelink grant.

In this embodiment, one piece of signaling may be associated with a plurality of sidelink grants, that is, one piece of signaling may be used to indicate activating or deactivating the plurality of sidelink grants.

Optionally, one piece of signaling may be associated with a plurality of sidelink grants in the following manners:
1. Being explicitly associated, which may include at least one of the following:
   carrying a bitmap of sidelink grants in the signaling, for example, 0011, where each bit of the bitmap corresponds to one sidelink grant; and it should be noted that one piece of signaling in this embodiment may alternatively indicate activation and deactivation; or
   carrying a list of identifiers of sidelink grants in the signaling, where in this case, one piece of signaling may indicate both activation and deactivation, or two pieces of signaling indicate activation and deactivation, respectively.
2. Being implicitly associated, which may include one of the following:
   a correspondence relationship between the resource for the signaling and the identifier of the sidelink grant and a correspondence relationship between the resource for the signaling and a status (activated/deactivated) of the sidelink grant.

In an implementation, the same signaling may be used to implement both activation and deactivation. For example, a bitmap of N sidelink grants is carried in the signaling, and each bit of the bitmap corresponds to one sidelink grant. A bit 0 indicates deactivating a sidelink grant corresponding to the bit, and a bit 1 indicates activating a sidelink grant corresponding to the bit; or a bit 1 indicates deactivating a sidelink grant corresponding to the bit, and a bit 0 indicates activating a sidelink grant corresponding to the bit.

In an implementation, the same signaling may be used to implement both activation and deactivation. For example, the signaling carries two fields. Field A is a list of identifiers of sidelink grants that needs to be activated, and field B is a list of identifiers of sidelink grants that needs to be deactivated. The user activates or deactivates different sidelink grants based on the two fields.

In an implementation, different signaling may be used to implement activation and deactivation separately. Activation signaling carries a list of identifiers of a plurality of corresponding sidelink grants, indicating that the sidelink grants are to be activated. Deactivation signaling carries a list of identifiers of a plurality of corresponding sidelink grants, indicating that the sidelink grants are to be deactivated.

Optionally, the base station sends signaling to indicate activating and/or deactivating at least one HARQ process of the configured sidelink grant.

Specifically, the signaling may be associated with at least one HARQ process of the sidelink grant in the following manners:
1.1. Being explicitly associated, which may include:
   carrying an identifier of a HARQ process in the signaling.
2.2. Being implicitly associated, which may include at least one of the following:
   a correspondence relationship between the resource in the signaling and the identifier of the HARQ process; or
   a correspondence relationship between at least one parameter carried in the signaling and the identifier of the HARQ process.

It should be noted that if different grants have different HARQ processes, only the identifier of the HARQ process may be carried; otherwise, the identifier of the HARQ process and the identifier of the grant need to be carried.

### Example 5:

The base station activates and/or deactivates a configured sidelink grant for the terminal device by using the DCI, where the DCI carries time domain information of an uplink resource used for feeding back the confirmation information. The uplink resource may be a physical uplink control channel (Physical Uplink Control Channel, PUCCH) or a physical uplink shared channel (Physical Uplink Sharing Channel, PUSCH).

### Example 6:

In an implementation, if the base station provides a configured sidelink grant to the terminal device and sends signaling for activation, the terminal device may not feed back the confirmation information in this case; and if the base station provides a configured sidelink grant and sends signaling for deactivation, the terminal device feeds back confirmation information when receiving the signaling.

In another implementation, if the base station provides a configured sidelink grant to the terminal device and sends signaling for deactivation, the terminal device may not feed back the confirmation information in this case; and if the base station provides a configured sidelink grant and sends signaling for activation, the terminal device feeds back confirmation information when receiving the signaling.

### Example 7:

The terminal device directly activates and/or deactivates a configured sidelink grant, and sends notification signaling to the base station, where the notification signaling indicates activating a sidelink grant {A B}:
In an implementation,
the base station replies to the terminal device, and the reply signaling indicates which sidelink grant cannot be activated. For example, if the reply signaling indicates a sidelink grant A, it indicates that the sidelink grant A cannot be activated, and the terminal device can activate a sidelink grant B according to the reply of the base station.

Optionally, in this implementation, first prohibition duration may be predefined by the protocol, or configured by the network-side device, or pre-configured. In the first prohibition duration, the terminal device cannot activate one or more grants. For example, if the second signaling carries an identifier of a grant A, the terminal device cannot activate the sidelink grant A within duration of a third timer or within N periods or before a specific time point. N is a positive integer.

In another implementation,
the base station replies to the terminal device, and the reply signaling indicates which sidelink grant can be activated. For example, if the reply signaling indicates a sidelink grant B, it indicates that the sidelink grant B can be activated, and the terminal device can activate the sidelink grant B according to the reply of the base station.

Optionally, in this implementation, second prohibition duration may be predefined by the protocol or configured by the network-side device. In the second prohibition duration, the terminal device cannot activate one or more grants. For example, if the second signaling carries an identifier of a grant B, the terminal device cannot activate the sidelink grant {A} within duration of a third timer or within N periods or before a specific time point. N is a positive integer.

In another implementation,
the base station replies to the terminal device, and the reply signaling indicates which sidelink grant can be activated. For example, if the reply signaling indicates a sidelink grant B, it indicates that the sidelink grant B can be activated, and the terminal device can activate the sidelink grant {A B C} according to the reply of the base station.

In another implementation,
the terminal device starts a corresponding timer after sending notification signaling. If the timer expires, the user does not activate a sidelink grant {A B}; if a user receives a reply from the base station during running of the timer, the sidelink grant {A B} is activated with reference to the reply. For how to determine, with reference to the reply, which grant can be activated, refer to the specific implementation manners described above.

Optionally, if the timer expires, the terminal device may activate all sidelink grants.

It should be noted that the foregoing example describes a case in which notification signaling is used for activation, and the same processing logic may be used for a case in which notification signaling is used for deactivation. Details are not described herein again.

Referring to FIG. 5, FIG. 5 is a structural diagram of a terminal device according to an embodiment of this disclosure. As shown in FIG. 5, the terminal device 500 includes:
a sending module 501, configured to send first information to a network-side device, where
the first information is used to indicate a target status of at least one grant, and the target status includes at least one of the following states: a deactivated state or an activated state.

The terminal device further includes:
a first receiving module, configured to receive first signaling from the network-side device before the first information is sent to the network-side device; where
the first signaling is used to indicate one of the following:
   activating the at least one grant;
   deactivating the at least one grant; and
   activating a first grant and deactivating a second grant, where the at least one grant includes at least two grants, and the first grant and the second grant are different grants in the at least two grants.

Optionally, the resource for sending the first information includes one of the following:
a first resource that is determined based on a reception time of the first signaling; and
a resource, indicated by the first signaling, for the first information.

Optionally, the first resource includes one of the following:
a resource with a difference from the reception time being greater than or equal to first duration in time domain;
a resource, with a minimum difference from the reception time in time domain, in resources configured for the terminal device; and
a resource, with a maximum difference from the reception time in time domain or a difference being equal to second duration, in the resources configured for the terminal device.

Optionally, the first information is confirmation information.

Optionally, the first signaling carries at least one of the following:
an identifier of the at least one grant;
a HARQ process identifier for the at least one grant;
a parameter having a correspondence relationship with the identifier of the at least one grant;
a parameter having a correspondence relationship with the HARQ process identifier for the at least one grant; or
a bitmap, where different bits in the bitmap are used to indicate activating or deactivating different grants in the at least one grant.

Optionally, the resource in the first signaling has a corresponding relationship with at least one of the following:
an identifier of the at least one grant;
a HARQ process identifier for the at least one grant; or
the target status of the at least one grant.

Optionally, the terminal device further includes:
a second receiving module, configured to receive second signaling from the network-side device after the first information is sent to the network-side device; where
the second signaling is used to indicate one of the following:
   activating part or all of the at least one grant;
   deactivating part or all of the at least one grant; and
   activating a third grant and deactivating a fourth grant, where the at least one grant includes at least two grants, and the third grant and the fourth grant are different grants in the at least two grants.

Optionally, the first information is notification information.

Optionally, the at least one grant is a sidelink grant.

Optionally, the first information is transmitted by using one of the following:
a hybrid automatic repeat request acknowledgment HARQ ACK;
an uplink scheduling request SR;
a media access control control element MAC CE;
a buffer status report BSR;
a reference signal RS; and
a preamble.

The terminal device 500 provided in this embodiment of this disclosure is capable of implementing processes that are implemented by the terminal device in the foregoing method embodiment. To avoid repetition, details are not described herein again.

In the terminal device 500 in this embodiment of this disclosure, the sending module 401 is configured to send the first information to the network-side device, where the first information is used to indicate the target status of the at least one grant, and the target status includes at least one of the following states: a deactivated state or an activated state. This can improve consistency of understanding on the resource status between the terminal device and the network-side device, thereby reducing mutual interference between data transmissions, or reducing resource waste.

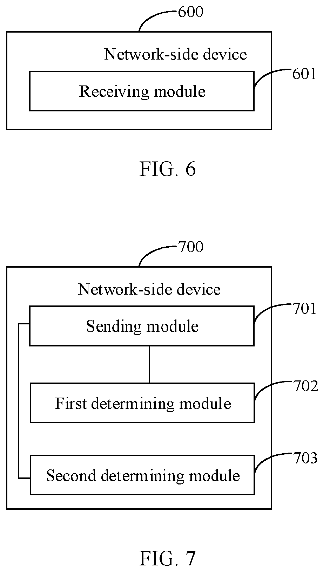

Referring to FIG. 6, FIG. 6 is a structural diagram of a network-side device according to an embodiment of this disclosure. As shown in FIG. 6, the network-side device 600 includes:
a receiving module 601, configured to receive first information from a terminal device, where
the first information is used to indicate a target status of at least one grant, and the target status includes at least one of the following states: a deactivated state or an activated state.

The network-side device further includes:
a first sending module, configured to send first signaling to the terminal device before the first information is received from the terminal device; where
the first signaling is used to indicate one of the following:
   activating the at least one grant;
   deactivating the at least one grant; and
   activating a first grant and deactivating a second grant, where the at least one grant includes at least two grants, and the first grant and the second grant are different grants in the at least two grants.

Optionally, the network-side device further includes a first determining module, where the first determining module is configured to perform at least one of the following:
after the first signaling is sent to the terminal device, in a case that the first information has been successfully received, determining that the terminal device has received the first signaling; or
after the first signaling is sent to the terminal device, in a case that the first information has not been successfully received, determining that the terminal device has not received the first signaling.

Optionally, after sending the first signaling to the terminal device, the network-side device may further include:
a starting module, configured to start a target timer; and
a second determining module, configured to: in a case that the target timer expires, determine that the first information has not been successfully received.

Optionally, the network-side device further includes:
a third determining module, configured to: in a case that the first information is received during running of the target timer, stop the target timer.

Optionally, the first signaling further indicates a transmission resource for the first information.

Optionally, the first information is confirmation information.

Optionally, the first signaling carries at least one of the following:
an identifier of the at least one grant;
a HARQ process identifier for the at least one grant;
a parameter having a correspondence relationship with the identifier of the at least one grant;
a parameter having a correspondence relationship with the HARQ process identifier for the at least one grant; or
a bitmap, where different bits in the bitmap are used to indicate activating or deactivating different grants in the at least one grant.

Optionally, the resource in the first signaling has a corresponding relationship with at least one of the following:
an identifier of the at least one grant;
a HARQ process identifier for the at least one grant; or
the target status of the at least one grant.

Optionally, a second sending module is configured to send second signaling to the terminal device after the first information is received from the terminal device; where
the second signaling is used to indicate one of the following:
activating part or all of the at least one grant;
deactivating part or all of the at least one grant; and
activating a third grant and deactivating a fourth grant, where the at least one grant includes at least two grants, and the third grant and the fourth grant are different grants in the at least two grants.

Optionally, the first information is notification information.

Optionally, the first information is transmitted by using one of the following:
a hybrid automatic repeat request acknowledgment HARQ ACK;
an uplink scheduling request SR;
a media access control control element MAC CE;
a buffer status report BSR;
a reference signal RS; and
a preamble.

The network-side device 600 provided in this embodiment of this disclosure is capable of implementing processes that are implemented by the network-side device in the foregoing method embodiment. To avoid repetition, details are not described herein again.

In the network-side device 600 in this embodiment of this disclosure, the receiving module 601 is configured to receive the first information from the terminal device, where the first information is used to indicate the target status of the at least one grant, and the target status includes at least one of the following states: a deactivated state or an activated state. This can improve consistency of understanding on the resource status between the terminal device and the network-side device, thereby reducing mutual interference between data transmissions, or reducing resource waste.

Referring to FIG. 7, FIG. 7 is a structural diagram of a network-side device according to an embodiment of this disclosure. As shown in FIG. 7, the network-side device 700 includes:
a sending module 701, configured to send an uplink grant configuration to a terminal device, where the uplink grant configuration is used to indicate one of the following: activating at least one grant; deactivating at least one grant; and activating a fifth grant and deactivating a sixth grant, where the fifth grant and the sixth grant are different grants in at least two grants;
a first determining module 702, configured to: in a case that an uplink signal is received on a resource for an uplink grant, determine that the terminal device has received the uplink grant configuration; and
a second determining module 703, configured to: in a case that an uplink signal is not received on the resource for the uplink grant, determine that the terminal device has not received the uplink grant configuration.

The network-side device 700 provided in this embodiment of this disclosure is capable of implementing processes that are implemented by the network-side device in the foregoing method embodiment. To avoid repetition, details are not described herein again.

In the network-side device 700 in this embodiment of this disclosure, the sending module 701 is configured to send the uplink grant configuration to the terminal device, where the uplink grant configuration is used to indicate one of the following: activating at least one grant; deactivating at least one grant; and activating the fifth grant and deactivating the sixth grant, where the fifth grant and the sixth grant are different grants in at least two grants; the first determining module 702 is configured to: in a case that an uplink signal is received on the resource for the uplink grant, determine that the terminal device has received the uplink grant configuration; and the second determining module 703 is configured to: in a case that an uplink signal is not received on the resource for the uplink grant, determine that the terminal device has not received the uplink grant configuration. Implicit feedback of the confirmation information by the terminal device are implemented. This can improve consistency of understanding on the resource status between the terminal device and the network-side device, thereby reducing mutual interference between data transmissions, or reducing resource waste.

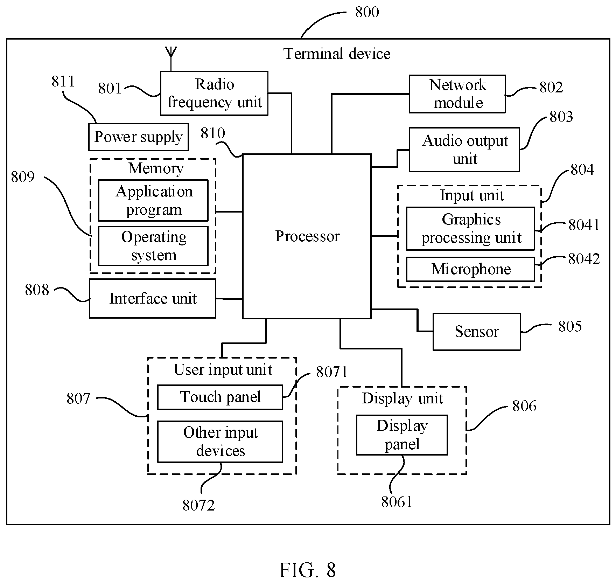

FIG. 8 is a structural diagram of another terminal device according to an embodiment of this disclosure not in accordance with the appended claims and given as examples useful for the understanding of the invention. Referring to FIG. 8, the terminal device 800 includes but is not limited to components such as a radio frequency unit 801, a network module 802, an audio output unit 803, an input unit 804, a sensor 805, a display unit 806, a user input unit 807, an interface unit 808, a memory 809, a processor 810, and a power supply 811. A person skilled in the art can understand that the structure of the terminal device shown in FIG. 8 does not constitute any limitation on the terminal device. The terminal device may include more or fewer components than those shown in the figure, or a combination of some components, or the components disposed differently. In this embodiment of this disclosure, the terminal device includes but is not limited to a mobile phone, a tablet computer, a laptop computer, a personal digital assistant, an in-vehicle terminal, a wearable device, a pedometer, and the like.

The radio frequency unit 801 is configured to send first information to a network-side device.

The first information is used to indicate a target status of at least one grant, and the target status includes at least one of the following states: a deactivated state or an activated state.

Optionally, the radio frequency unit 801 is further configured to:
receiving first signaling from the network-side device before sending first information to the network-side device; where
the first signaling is used to indicate one of the following:
   activating the at least one grant;
   deactivating the at least one grant; and
   activating a first grant and deactivating a second grant, where the at least one grant includes at least two grants, and the first grant and the second grant are different grants in the at least two grants.

Optionally, the resource for sending the first information includes one of the following:
a first resource that is determined based on a reception time of the first signaling; and
a resource, indicated by the first signaling, for the first information.

Optionally, the first resource includes one of the following:
a resource with a difference from the reception time being greater than or equal to first duration in time domain;
a resource, with a minimum difference from the reception time in time domain, in resources configured for the terminal device; and
a resource, with a maximum difference from the reception time in time domain or a difference being equal to second duration, in the resources configured for the terminal device.

Optionally, the first information is confirmation information.

Optionally, the first signaling carries at least one of the following:
an identifier of the at least one grant;
a HARQ process identifier for the at least one grant;
a parameter having a correspondence relationship with the identifier of the at least one grant;
a parameter having a correspondence relationship with the HARQ process identifier for the at least one grant; or
a bitmap, where different bits in the bitmap are used to indicate activating or deactivating different grants in the at least one grant.

Optionally, the resource in the first signaling has a corresponding relationship with at least one of the following:
an identifier of the at least one grant;
a HARQ process identifier for the at least one grant; or
the target status of the at least one grant.

Optionally, the radio frequency unit 801 is further configured to:
receiving second signaling from the network-side device after sending first information to the network-side device; where
the second signaling is used to indicate one of the following:
   activating part or all of the at least one grant;
   deactivating part or all of the at least one grant; and
   activating a third grant and deactivating a fourth grant, where the at least one grant includes at least two grants, and the third grant and the fourth grant are different grants in the at least two grants.

Optionally, the first information is notification information.

Optionally, the at least one grant is a sidelink grant.

Optionally, the first information is transmitted by using one of the following:
a hybrid automatic repeat request acknowledgment HARQ ACK;
an uplink scheduling request SR;
a media access control control element MAC CE;
a buffer status report BSR;
a reference signal RS; and
a preamble.

It should be understood that in this embodiment of this disclosure, the radio frequency unit 801 may be configured to: receive and transmit signals in an information receiving/sending process or a call process; and specifically, after receiving downlink data from a base station, transmit the downlink information to the processor 810 for processing, and in addition, transmit uplink data to the base station. Generally, the radio frequency unit 801 includes but is not limited to an antenna, at least one amplifier, a transceiver, a coupler, a low noise amplifier, a duplexer, and the like. In addition, the radio frequency unit 801 may also communicate with a network and other devices via a wireless communications system.

The terminal device provides a user with wireless broadband internet access through the network module 802, for example, helping the user to transmit and receive e-mails, browse web pages, and access streaming media.

The audio output unit 803 may convert audio data received by the radio frequency unit 801 or the network module 802 or stored in the memory 809 into an audio signal and output the audio signal as a sound. Furthermore, the audio output unit 803 may also provide audio output (for example, a call signal received sound or a message received sound) related to a specific function performed by the terminal device 800. The audio output unit 803 includes a speaker, a buzzer, a receiver, and the like.

The input unit 804 is configured to receive an audio or video signal. The input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. A processed image frame may be displayed on the display unit 806. The image frame processed by the graphics processing unit 8041 may be stored in the memory 809 (or another storage medium) or be sent by the radio frequency unit 801 or the network module 802. The microphone 8042 is capable of receiving sounds and processing such sounds into audio data. The processed audio data may be converted in a telephone call mode into a format that can be transmitted by the radio frequency unit 801 to a mobile communications base station, for outputting.

The terminal device 800 may further include at least one sensor 805, for example, an optical sensor, a motion sensor, and other sensors. Specifically, the optical sensor may include an ambient light sensor and a proximity sensor. The ambient light sensor may adjust luminance of the display panel 8061 based on brightness of ambient light, and the proximity sensor may turn off the display panel 8061 and/or backlight when the terminal device 800 moves close to an ear. As a type of motion sensor, an accelerometer sensor can detect magnitudes of accelerations in all directions (usually three axes), can detect a magnitude and a direction of gravity when the mobile phone is in a static state, and can be applied to posture recognition (such as screen switching between portrait and landscape, related games, and magnetometer posture calibration) of the terminal device, functions related to vibration recognition (such as pedometer and tapping), and the like. The sensor 805 may also include a fingerprint sensor, a pressure sensor, an iris sensor, a molecular sensor, a gyroscope, a barometer, a hygrometer, a thermometer, an infrared sensor, and the like. Details are not described herein.

The display unit 806 is configured to display information input by the user or information provided to the user. The display unit 806 may include a display panel 8061, and the display panel 8061 may be configured in a form of a liquid crystal display (Liquid Crystal Display, LCD), an organic light-emitting diode (Organic Light-Emitting Diode, OLED), or the like.

The user input unit 807 may be configured to receive input digit or character information and generate key signal input related to user setting and function control of the terminal device. Specifically, the user input unit 807 may include a touch panel 8071 and another input device 8072. The touch panel 8071 is also referred to as a touchscreen and can collect a touch operation (such as an operation performed by the user on the touch panel 8071 or near the touch panel 8071 with a finger or by using any proper object or accessory such as a stylus) of the user on or near the touch panel 8071. The touch panel 8071 may include two parts: a touch detection apparatus and a touch controller. The touch detection apparatus detects a touch azimuth of a user, detects a signal brought by a touch operation, and transmits the signal to the touch controller. The touch controller receives touch information from the touch detection apparatus, converts the touch information into touchpoint coordinates, and sends the touchpoint coordinates to the processor 810, and can receive a command sent by the processor 810 and execute the command. In addition, the touch panel 8071 may be implemented in a plurality of forms, for example, a resistive, capacitive, infrared, or surface acoustic wave touch panel. In addition to the touch panel 8071, the user input unit 807 may further include other input devices 8072. Specifically, the other input devices 8072 may include but are not limited to a physical keyboard, a function key (such as a volume control key or a power on/off key), a trackball, a mouse, a joystick, and the like. Details are not described herein.

Further, the touch panel 8071 may cover the display panel 8061. When detecting a touch operation on or near the touch panel 8071, the touch panel 8071 transmits the touch operation to the processor 810 to determine a type of a touch event. Then, the processor 810 provides a corresponding visual output on the display panel 8061 based on the type of the touch event. Although in FIG. 8, the touch panel 8071 and the display panel 8061 act as two independent parts to implement input and output functions of the terminal device, in some embodiments, the touch panel 8071 and the display panel 8061 may be integrated to implement the input and output functions of the terminal device. This is not specifically limited herein.

The interface unit 808 is an interface between an external apparatus and the terminal device 800. For example, an external apparatus may include a wired or wireless headset port, an external power supply (or a battery charger) port, a wired or wireless data port, a memory port, a port for connecting an apparatus with an identification module, an audio input/output (I/O) port, a video I/O port, an earphone port, and the like. The interface unit 808 may be configured to receive an input (for example, data information or power) from an external apparatus and transmit the received input to one or more elements within the terminal device 800, or may be configured to transmit data between the terminal device 800 and the external apparatus.

The memory 809 may be configured to store software programs and various data. The memory 809 may primarily include a program storage area and a data storage area. The program storage area may store an operating system, an application (such as an audio play function and an image play function) required by at least one function, and the like. The data storage area may store data (such as audio data and a phone book) created based on use of the mobile phone. In addition, the memory 809 may include a high-speed random access memory, and may further include a non-volatile memory such as a disk storage device, a flash memory device, or another volatile solid-state storage device.

The processor 810 is a control center of the terminal device, uses various interfaces and lines to connect parts of the entire terminal device, and executes various functions and processing data of the terminal device by running or executing software programs and/or modules stored in the memory 809 and invoking data stored in the memory 809, so as to perform overall monitoring on the terminal device. The processor 810 may include one or more processing units. Preferably, an application processor and a modem processor may be integrated in the processor 810. The application processor primarily processes an operating system, user interfaces, application programs, and the like. The modem processor primarily processes radio communication. It can be understood that the modem processor may alternatively be not integrated in the processor 810.

The terminal device 800 may further include a power supply 811 (such as a battery) that supplies power to components. Optionally, the power supply 811 may be logically connected to the processor 810 through a power management system. In this way, functions such as charge management, discharge management, and power consumption management are implemented by using the power management system.

In addition, the terminal device 800 includes some functional modules that are not shown. Details are not described herein.

Preferably, an embodiment of this disclosure further provides a terminal device, including a processor 810, a memory 809, and a computer program stored in the memory 809 and capable of running on the processor 810. When the computer program is executed by the processor 810, the processes of the embodiment of the foregoing indication method can be implemented, with same technical effects achieved. To avoid repetition, details are not described herein again.

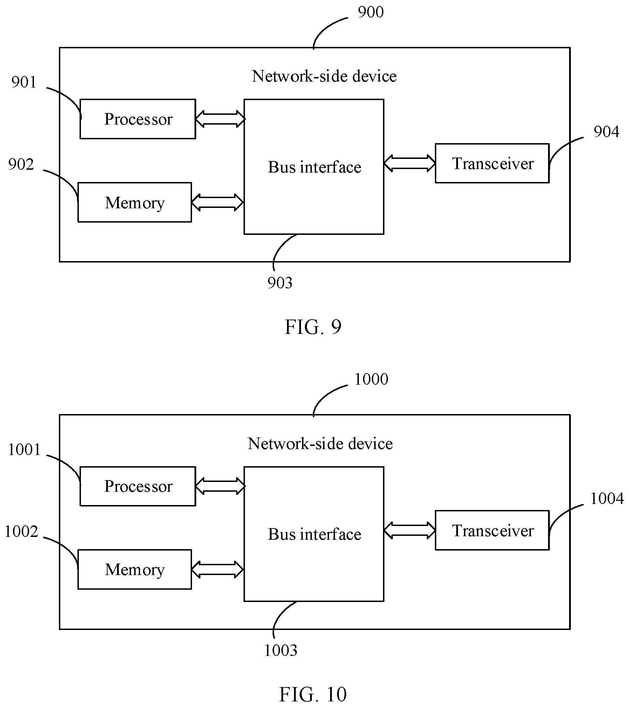

Referring to FIG. 9, FIG. 9 is a structural diagram of a network-side device according to another embodiment of this disclosure not in accordance with the appended claims and given as examples useful for the understanding of the invention. As shown in FIG. 9, the network-side device 900 includes: a processor 901, a memory 902, a bus interface 903, and a transceiver 904, where the processor 901, the memory 902, and the transceiver 904 are all connected to the bus interface 903.

In this embodiment of this disclosure, the network-side device 900 further includes a computer program stored in the memory 902 and capable of running on the processor 901.

In this embodiment of this disclosure, the transceiver 904 is configured to:
receiving first information from a terminal device, where
the first information is used to indicate a target status of at least one grant, and the target status includes at least one of the following states: a deactivated state or an activated state.

Optionally, the transceiver 904 is further configured to:
sending first signaling to the terminal device before the receiving first information from the terminal device; where
the first signaling is used to indicate one of the following:
   activating the at least one grant;
   deactivating the at least one grant; and
   activating a first grant and deactivating a second grant, where the at least one grant includes at least two grants, and the first grant and the second grant are different grants in the at least two grants.

Optionally, the processor 901 is configured to perform at least one of the following:
in a case that the first information is successfully received, determining that the terminal device has received the first signaling; or
in a case that the first information has not been successfully received, determining that the terminal device has not received the first signaling.

Optionally, the processor 901 is further configured to:
start a target timer after sending the first signaling to the terminal device; and
in a case that the target timer expires, determine that the first information has not been successfully received.

Optionally, the processor 901 is further configured to:
in a case that the first information is received during running of the target timer, stop the target timer.

Optionally, the first signaling further indicates a transmission resource for the first information.

Optionally, the first information is confirmation information.

Optionally, the first signaling carries at least one of the following:
an identifier of the at least one grant;
a HARQ process identifier for the at least one grant;
a parameter having a correspondence relationship with the identifier of the at least one grant;
a parameter having a correspondence relationship with the HARQ process identifier for the at least one grant; or
a bitmap, where different bits in the bitmap are used to indicate activating or deactivating different grants in the at least one grant.

Optionally, the resource in the first signaling has a corresponding relationship with at least one of the following:
an identifier of the at least one grant;
a HARQ process identifier for the at least one grant; or
the target status of the at least one grant.

Optionally, the transceiver 904 is further configured to:
send second signaling to the terminal device after the first information is received from the terminal device; where
the second signaling is used to indicate one of the following:
   activating part or all of the at least one grant;
   deactivating part or all of the at least one grant; and
   activating a third grant and deactivating a fourth grant, where the at least one grant includes at least two grants, and the third grant and the fourth grant are different grants in the at least two grants.

Optionally, the first information is notification information.

Optionally, the first information is transmitted by using one of the following:
a hybrid automatic repeat request acknowledgment HARQ ACK;
an uplink scheduling request SR;
a media access control control element MAC CE;
a buffer status report BSR;
a reference signal RS; and
a preamble.

Referring to FIG. 10, FIG. 10 is a structural diagram of a network-side device according to another embodiment of this disclosure not in accordance with the appended claims and given as examples useful for the understanding of the invention. As shown in FIG. 10, the network-side device 1000 includes: a processor 1001, a memory 1002, a bus interface 1003, and a transceiver 1004, where the processor 1001, the memory 1002, and the transceiver 1004 are all connected to the bus interface 1003.

In this embodiment of this disclosure, the network-side device 1000 further includes a computer program stored in the memory 1002 and capable of running on the processor 1001.

In this embodiment of this disclosure, the transceiver 1004 is configured to send an uplink grant configuration to a terminal device, where the uplink grant configuration is used to indicate one of the following: activating at least one grant; deactivating at least one grant; and activating a fifth grant and deactivating a sixth grant, where the fifth grant and the sixth grant are different grants in at least two grants.

The processor is configured to: in a case that an uplink signal is received on a resource for an uplink grant, determine that the terminal device has received the uplink grant configuration; or in a case that an uplink signal is not received on the resource for the uplink grant, determine that the terminal device has not received the uplink grant configuration.

An embodiment of this disclosure further provides a computer-readable storage medium, where a computer program is stored in the computer-readable storage medium. When the computer program is executed by a processor, the processes of the foregoing embodiment of the indication method are implemented, with the same technical effects achieved. To avoid repetition, details are not described herein again. The computer readable storage medium is, for example, a read-only memory (Read-Only Memory, ROM for short), a random access memory (Random Access Memory, RAM for short), a magnetic disk, or an optical disc.

It should be noted that the terms "include", "include", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this disclosure essentially or the part contributing to the prior art may be implemented in a form of a software product. The software product is stored in a storage medium (such as a ROM/RAM, a magnetic disk, or an optical disc), and includes several pieces of signaling for enabling a terminal (which may be a mobile phone, a computer, a server, an air conditioner, a network device, or the like) to perform the methods described in the embodiments of this disclosure.

The foregoing describes the embodiments of this disclosure with reference to the accompanying drawings. However, this disclosure is not limited to the foregoing specific implementation manners. The foregoing specific implementation manners are merely illustrative rather than restrictive. As instructed by this disclosure, persons of ordinary skill in the art may develop many other manners without departing from principles of this disclosure and the protection scope of the claims, and all such manners fall within the protection scope of this disclosure as defined by the appended claims.

## Claims

1. An indication method, applied to a terminal device and comprising:
receiving first signaling from a network-side device; wherein the first signaling is downlink control information, DCI, or an uplink grant;
wherein the first signaling is used to indicate one of the following:
activating part or all of at least one grant;
deactivating part or all of at least one grant; and
activating a first grant and deactivating a second grant of at least one grant,
wherein the at least one grant comprises at least two grants, and the first grant and the second grant are different grants in the at least two grants; wherein the at least one grant is a sidelink grant;
sending (201) first information to the network-side device; wherein
the first information is used to indicate a target status of at least one grant, the first information carries a bitmap, each bit of the bitmap corresponds to the target status of one grant, and the target status comprises at least one of the following states: a deactivated state or an activated state.

2. The method according to claim 1, wherein a resource for sending the first information comprises one of the following:
a first resource that is determined based on a reception time of the first signaling; or
a resource, indicated by the first signaling, for the first information;
wherein the first resource comprises one of the following:
a resource with a difference from the reception time being greater than or equal to first duration in time domain;
a resource, with a minimum difference from the reception time in time domain, in resources configured for the terminal device; or
a resource, with a maximum difference from the reception time in time domain or a difference being equal to second duration, in the resources configured for the terminal device.

3. The method according to claim 1, wherein the first information is confirmation information.

4. The method according to claim 1, wherein the first signaling carries at least one of the following:
an identifier of the at least one grant;
a HARQ process identifier for the at least one grant;
a parameter having a correspondence relationship with the identifier of the at least one grant;
a parameter having a correspondence relationship with the HARQ process identifier for the at least one grant; or
a bitmap, wherein different bits in the bitmap are used to indicate activating or deactivating different grants in the at least one grant.

5. The method according to claim 1, wherein the first information is sent by using one of the following:
a hybrid automatic repeat request acknowledgment, HARQ ACK;
an uplink scheduling request, SR;
a media access control control element, MAC CE;
a buffer status report, BSR;
a reference signal, RS; or
a preamble.

6. The method according to claim 1, wherein the first information further carries:
an identifier of the at least one grant.

7. An indication method, applied to a network-side device and comprising:
sending first signaling to a terminal device; wherein the first signaling is downlink control information, DCI, or an uplink grant;
wherein the first signaling is used to indicate one of the following:
activating part or all of at least one grant;
deactivating part or all of at least one grant; and
activating a first grant and deactivating a second grant of at least one grant, wherein the at least one grant comprises at least two grants, and the first grant and the second grant are different grants in the at least two grants; wherein the at least one grant is a sidelink grant;
receiving (301) first information from the terminal device, wherein
the first information is used to indicate a target status of at least one grant, the first information carries a bitmap, each bit of the bitmap corresponds to the target status of one grant, and the target status comprises at least one of the following states: a deactivated state or an activated state.

8. The method according to claim 7, wherein the first information is confirmation information.

9. The method according to claim 7, wherein the first signaling carries at least one of the following:
an identifier of the at least one grant;
a HARQ process identifier for the at least one grant;
a parameter having a correspondence relationship with the identifier of the at least one grant;
a parameter having a correspondence relationship with the HARQ process identifier for the at least one grant; or
a bitmap, wherein different bits in the bitmap are used to indicate activating or deactivating different grants in the at least one grant.

10. The method according to claim 7, wherein the first information is sent by using one of the following:
a hybrid automatic repeat request acknowledgment, HARQ ACK;
an uplink scheduling request, SR;
a media access control control element, MAC CE;
a buffer status report, BSR;
a reference signal, RS; or
a preamble;
or, wherein the first information carries at least one of the following information:
a bitmap, wherein each bit of the bitmap corresponds to a status of one grant; or
an identifier of the at least one grant.

11. A terminal device, comprising:
a first receiving module, configured to receive first signaling from a network-side device; wherein the first signaling is downlink control information, DCI, or an uplink grant;
wherein the first signaling is used to indicate one of the following:
activating at least one of at least one grant;
deactivating at least one of at least one grant; and
activating a first grant and deactivating a second grant of at least one grant, wherein the at least one grant comprises at least two grants, and the first grant and the second grant are different grants in the at least two grants; wherein the at least one grant is a sidelink grant;
a sending module (501), configured to send first information to the network-side device, wherein
the first information is used to indicate a target status of at least one grant, the first information carries a bitmap, each bit of the bitmap corresponds to the target status of one grant, and the target status comprises at least one of the following states: a deactivated state or an activated state.

12. The terminal device according to claim 11, wherein a resource for sending the first information comprises one of the following:
a first resource that is determined based on a reception time of the first signaling; and
a resource, indicated by the first signaling, for the first information.

13. The terminal device according to claim 12, wherein the first resource comprises one of the following:
a resource with a difference from the reception time being greater than or equal to first duration in time domain;
a resource, with a minimum difference from the reception time in time domain, in resources configured for the terminal device; or
a resource, with a maximum difference from the reception time in time domain or a difference being equal to second duration, in the resources configured for the terminal device.

14. The terminal device according to claim 11, wherein the first information is sent by using one of the following:
a hybrid automatic repeat request acknowledgment, HARQ ACK;
an uplink scheduling request, SR;
a media access control control element, MAC CE;
a buffer status report, BSR;
a reference signal, RS; or
a preamble.

15. A network-side device, comprising:
a first sending module, configured to send first signaling to a terminal device; wherein the first signaling is downlink control information, DCI, or an uplink grant;
wherein the first signaling is used to indicate one of the following:
activating at least one of at least one grant;
deactivating at least one of at least one grant; and
activating a first grant and deactivating a second grant of at least one grant, wherein the at least one grant comprises at least two grants, and the first grant and the second grant are different grants in the at least two grants; wherein the at least one grant is a sidelink grant;
a receiving module (601), configured to receive first information from the terminal device, wherein
the first information is used to indicate a target status of at least one grant, the first information carries a bitmap, each bit of the bitmap corresponds to the target status of one grant, and the target status comprises at least one of the following states: a deactivated state or an activated state.

## Patentansprüche

1. Angabeverfahren, das auf ein Endgerät angewendet wird und umfasst:
Empfangen einer ersten Signalisierung von einer netzseitigen Vorrichtung; wobei die erste Signalisierung eine Downlink-Steuerinformation, DCI, oder ein Uplink-Grant ist;
wobei die erste Signalisierung verwendet wird, um eines der Folgenden anzugeben:
Aktivieren eines Teils oder der Gesamtheit mindestens eines Grants;
Deaktivieren eines Teils oder der Gesamtheit mindestens eines Grants; und
Aktivieren eines ersten Grants und Deaktivieren eines zweiten Grants von mindestens einem Grant,
wobei der mindestens eine Grant mindestens zwei Grants umfasst, und der erste Grant und der zweite Grant unterschiedliche Grants in den mindestens zwei Grants sind; wobei der mindestens eine Grant ein Sidelink-Grant ist;
Senden (201) erster Information an die netzseitige Vorrichtung; wobei
die erste Information verwendet wird, um einen Zielstatus mindestens eines Grants anzugeben, die erste Information eine Bitmap trägt, jedes Bit der Bitmap dem Zielstatus eines Grants entspricht, und der Zielstatus mindestens einen der folgenden Zustände umfasst: einen deaktivierten Zustand oder einen aktivierten Zustand.

2. Verfahren nach Anspruch 1, wobei eine Ressource zum Senden der ersten Information eines der Folgenden umfasst:
eine erste Ressource, die basierend auf einer Empfangszeit der ersten Signalisierung bestimmt wird; oder
eine durch die erste Signalisierung angegebene Ressource für die erste Information;
wobei die erste Ressource eines der Folgenden umfasst:
eine Ressource mit einer Differenz von der Empfangszeit, die größer als oder gleich einer ersten Dauer in der Zeitdomäne ist;
eine Ressource, mit einer minimalen Differenz von der Empfangszeit in der Zeitdomäne, in Ressourcen, die für das Endgerät konfiguriert sind; oder
eine Ressource, mit einer maximalen Differenz von der Empfangszeit in der Zeitdomäne oder einer Differenz, die gleich einer zweiten Dauer ist, in den Ressourcen, die für das Endgerät konfiguriert sind.

3. Verfahren nach Anspruch 1, wobei die erste Information Bestätigungsinformation ist.

4. Verfahren nach Anspruch 1, wobei die erste Signalisierung mindestens eines der Folgenden trägt:
eine Kennung des mindestens einen Grants;
eine HARQ-Prozesskennung für den mindestens einen Grant;
einen Parameter, der eine Entsprechungsbeziehung mit der Kennung des mindestens einen Grants aufweist;
einen Parameter, der eine Entsprechungsbeziehung mit der HARQ-Prozesskennung für den mindestens einen Grant aufweist; oder
eine Bitmap, wobei unterschiedliche Bits in der Bitmap verwendet werden, um Aktivieren oder Deaktivieren unterschiedlicher Grants in dem mindestens einen Grant anzugeben.

5. Verfahren nach Anspruch 1, wobei die erste Information unter Verwendung eines der Folgenden gesendet wird:
einer Bestätigung einer hybriden automatischen Wiederholungsanforderung, HARQ ACK;
einer Uplink-Planungsanforderung, SR;
eines Steuerelements der Medienzugriffssteuerung, MAC CE;
eines Pufferstatusberichts, BSR;
eines Referenzsignals, RS; oder
einer Präambel.

6. Verfahren nach Anspruch 1, wobei die erste Information ferner Folgendes trägt:
eine Kennung des mindestens einen Grants.

7. Angabeverfahren, das auf eine netzseitige Vorrichtung angewendet wird und Folgendes umfasst:
Senden einer ersten Signalisierung an ein Endgerät; wobei die erste Signalisierung eine Downlink-Steuerinformation, DCI, oder ein Uplink-Grant ist;
wobei die erste Signalisierung verwendet wird, um eines der Folgenden anzugeben:
Aktivieren eines Teils oder der Gesamtheit mindestens eines Grants;
Deaktivieren eines Teils oder der Gesamtheit mindestens eines Grants; und
Aktivieren eines ersten Grants und Deaktivieren eines zweiten Grants von mindestens einem Grant,
wobei der mindestens eine Grant mindestens zwei Grants umfasst, und der erste Grant und der zweite Grant unterschiedliche Grants in den mindestens zwei Grants sind; wobei der mindestens eine Grant ein Sidelink-Grant ist;
Empfangen (301) erster Information von dem Endgerät, wobei
die erste Information verwendet wird, um einen Zielstatus mindestens eines Grants anzugeben, die erste Information eine Bitmap trägt, jedes Bit der Bitmap dem Zielstatus eines Grants entspricht, und der Zielstatus mindestens einen der folgenden Zustände umfasst: einen deaktivierten Zustand oder einen aktivierten Zustand.

8. Verfahren nach Anspruch 7, wobei die erste Information Bestätigungsinformation ist.

9. Verfahren nach Anspruch 7, wobei die erste Signalisierung mindestens eines der Folgenden trägt:
eine Kennung des mindestens einen Grants;
eine HARQ-Prozesskennung für den mindestens einen Grant;
einen Parameter, der eine Entsprechungsbeziehung mit der Kennung des mindestens einen Grants aufweist;
einen Parameter, der eine Entsprechungsbeziehung mit der HARQ-Prozesskennung für den mindestens einen Grant aufweist; oder
eine Bitmap, wobei unterschiedliche Bits in der Bitmap verwendet werden, um Aktivieren oder Deaktivieren unterschiedlicher Grants in dem mindestens einen Grant anzugeben.

10. Verfahren nach Anspruch 7, wobei die erste Information unter Verwendung eines der Folgenden gesendet wird:
einer Bestätigung einer hybriden automatischen Wiederholungsanforderung, HARQ ACK;
einer Uplink-Planungsanforderung, SR;
eines Steuerelements der Medienzugriffssteuerung, MAC CE;
eines Pufferstatusberichts, BSR;
eines Referenzsignals, RS; oder
einer Präambel;
oder, wobei die erste Information mindestens eine der folgenden Informationen trägt:
eine Bitmap, wobei jedes Bit der Bitmap einem Status eines Grants entspricht; oder
eine Kennung des mindestens einen Grants.

11. Endgerät, umfassend:
ein erstes Empfangsmodul, das dazu konfiguriert ist, eine erste Signalisierung von einer netzseitigen Vorrichtung zu empfangen; wobei die erste Signalisierung eine Downlink-Steuerinformation, DCI, oder ein Uplink-Grant ist;
wobei die erste Signalisierung verwendet wird, um eines der Folgenden anzugeben:
Aktivieren mindestens eines von mindestens einem Grant;
Deaktivieren mindestens eines von mindestens einem Grant; und
Aktivieren eines ersten Grants und Deaktivieren eines zweiten Grants von mindestens einem Grant,
wobei der mindestens eine Grant mindestens zwei Grants umfasst, und der erste Grant und der zweite Grant unterschiedliche Grants in den mindestens zwei Grants sind; wobei der mindestens eine Grant ein Sidelink-Grant ist;
ein Sendemodul (501), das dazu konfiguriert ist, erste Information an die netzseitige Vorrichtung zu senden, wobei die erste Information verwendet wird, um einen Zielstatus mindestens eines Grants anzugeben, die erste Information eine Bitmap trägt, jedes Bit der Bitmap dem Zielstatus eines Grants entspricht, und der Zielstatus mindestens einen der folgenden Zustände umfasst: einen deaktivierten Zustand oder einen aktivierten Zustand.

12. Endgerät nach Anspruch 11, wobei eine Ressource zum Senden der ersten Information eines der Folgenden umfasst:
eine erste Ressource, die basierend auf einer Empfangszeit der ersten Signalisierung bestimmt wird; und
eine durch die erste Signalisierung angegebene Ressource für die erste Information.

13. Endgerät nach Anspruch 12, wobei die erste Ressource eines der Folgenden umfasst:
eine Ressource mit einer Differenz von der Empfangszeit, die größer als oder gleich einer ersten Dauer in der Zeitdomäne ist;
eine Ressource, mit einer minimalen Differenz von der Empfangszeit in der Zeitdomäne, in Ressourcen, die für das Endgerät konfiguriert sind; oder
eine Ressource, mit einer maximalen Differenz von der Empfangszeit in der Zeitdomäne oder einer Differenz, die gleich einer zweiten Dauer ist, in den Ressourcen, die für das Endgerät konfiguriert sind.

14. Endgerät nach Anspruch 11,
wobei die erste Information unter Verwendung eines der Folgenden gesendet wird:
einer Bestätigung einer hybriden automatischen Wiederholungsanforderung, HARQ ACK;
einer Uplink-Planungsanforderung, SR;
eines Steuerelements der Medienzugriffssteuerung, MAC CE;
eines Pufferstatusberichts, BSR;
eines Referenzsignals, RS; oder
einer Präambel.

15. Netzseitige Vorrichtung, umfassend:
ein erstes Sendemodul, das dazu konfiguriert ist, eine erste Signalisierung an ein Endgerät zu senden; wobei die erste Signalisierung eine Downlink-Steuerinformation, DCI, oder ein Uplink-Grant ist;
wobei die erste Signalisierung verwendet wird, um eines der Folgenden anzugeben:
Aktivieren mindestens eines von mindestens einem Grant;
Deaktivieren mindestens eines von mindestens einem Grant; und
Aktivieren eines ersten Grants und Deaktivieren eines zweiten Grants von mindestens einem Grant,
wobei der mindestens eine Grant mindestens zwei Grants umfasst, und der erste Grant und der zweite Grant unterschiedliche Grants in den mindestens zwei Grants sind; wobei der mindestens eine Grant ein Sidelink-Grant ist;
ein Empfangsmodul (601), das dazu konfiguriert ist, erste Information von dem Endgerät zu empfangen, wobei
die erste Information verwendet wird, um einen Zielstatus mindestens eines Grants anzugeben, die erste Information eine Bitmap trägt, jedes Bit der Bitmap dem Zielstatus eines Grants entspricht, und der Zielstatus mindestens einen der folgenden Zustände umfasst: einen deaktivierten Zustand oder einen aktivierten Zustand.

## Revendications

1. Procédé d'indication, appliqué à un dispositif terminal et comprenant :
la réception d'une première signalisation depuis un dispositif côté réseau ; dans lequel la première signalisation est une information de commande de liaison descendante, DCI, ou une autorisation de liaison montante ;
dans lequel la première signalisation est utilisée pour indiquer l'une des opérations suivantes :
l'activation d'une partie ou de la totalité d'au moins une autorisation ;
la désactivation d'une partie ou de la totalité d'au moins une autorisation ; et
l'activation d'une première autorisation et la désactivation d'une deuxième autorisation d'au moins une autorisation,
dans lequel l'au moins une autorisation comprend au moins deux autorisations, et la première autorisation et la deuxième autorisation sont des autorisations différentes parmi les au moins deux autorisations ; dans lequel l'au moins une autorisation est une autorisation de liaison latérale ;
l'envoi (201) d'une première information au dispositif côté réseau ; dans lequel
la première information est utilisée pour indiquer un état cible d'au moins une autorisation, la première information porte un bitmap, chaque bit du bitmap correspond à l'état cible d'une autorisation, et l'état cible comprend au moins l'un des états suivants : un état désactivé ou un état activé.

2. Procédé selon la revendication 1, dans lequel une ressource pour envoyer la première information comprend l'une des suivantes :
une première ressource qui est déterminée sur la base d'un temps de réception de la première signalisation ; ou
une ressource, indiquée par la première signalisation, pour la première information ;
dans lequel la première ressource comprend l'une des suivantes :
une ressource ayant une différence par rapport au temps de réception qui est supérieure ou égale à une première durée dans le domaine temporel ;
une ressource, ayant une différence minimale par rapport au temps de réception dans le domaine temporel, parmi des ressources configurées pour le dispositif terminal ; ou
une ressource, ayant une différence maximale par rapport au temps de réception dans le domaine temporel ou une différence qui est égale à une deuxième durée, parmi les ressources configurées pour le dispositif terminal.

3. Procédé selon la revendication 1, dans lequel la première information est une information de confirmation.

4. Procédé selon la revendication 1, dans lequel la première signalisation porte au moins l'un des éléments suivants :
un identifiant de l'au moins une autorisation ;
un identifiant de processus HARQ pour l'au moins une autorisation ;
un paramètre ayant une relation de correspondance avec l'identifiant de l'au moins une autorisation ;
un paramètre ayant une relation de correspondance avec l'identifiant de processus HARQ pour l'au moins une autorisation ; ou
un bitmap, dans lequel différents bits dans le bitmap sont utilisés pour indiquer l'activation ou la désactivation de différentes autorisations dans l'au moins une autorisation.

5. Procédé selon la revendication 1, dans lequel la première information est envoyée en utilisant l'un des éléments suivants :
un accusé de réception de demande de répétition automatique hybride, HARQ ACK ;
une demande de planification de liaison montante, SR ;
un élément de commande de contrôle d'accès au support, MAC CE ;
un rapport d'état de tampon, BSR ;
un signal de référence, RS ; ou
un préambule.

6. Procédé selon la revendication 1, dans lequel la première information porte en outre :
un identifiant de l'au moins une autorisation.

7. Procédé d'indication, appliqué à un dispositif côté réseau et comprenant :
l'envoi d'une première signalisation à un dispositif terminal ; dans lequel la première signalisation est une information de commande de liaison descendante, DCI, ou une autorisation de liaison montante ;
dans lequel la première signalisation est utilisée pour indiquer l'une des opérations suivantes :
l'activation d'une partie ou de la totalité d'au moins une autorisation ;
la désactivation d'une partie ou de la totalité d'au moins une autorisation ; et
l'activation d'une première autorisation et la désactivation d'une deuxième autorisation d'au moins une autorisation,
dans lequel l'au moins une autorisation comprend au moins deux autorisations, et la première autorisation et la deuxième autorisation sont des autorisations différentes parmi les au moins deux autorisations ; dans lequel l'au moins une autorisation est une autorisation de liaison latérale ;
la réception (301) d'une première information depuis le dispositif terminal, dans lequel
la première information est utilisée pour indiquer un état cible d'au moins une autorisation, la première information porte un bitmap, chaque bit du bitmap correspond à l'état cible d'une autorisation, et l'état cible comprend au moins l'un des états suivants : un état désactivé ou un état activé.

8. Procédé selon la revendication 7, dans lequel la première information est une information de confirmation.

9. Procédé selon la revendication 7, dans lequel la première signalisation porte au moins l'un des éléments suivants :
un identifiant de l'au moins une autorisation ;
un identifiant de processus HARQ pour l'au moins une autorisation ;
un paramètre ayant une relation de correspondance avec l'identifiant de l'au moins une autorisation ;
un paramètre ayant une relation de correspondance avec l'identifiant de processus HARQ pour l'au moins une autorisation ; ou
un bitmap, dans lequel différents bits dans le bitmap sont utilisés pour indiquer l'activation ou la désactivation de différentes autorisations dans l'au moins une autorisation.

10. Procédé selon la revendication 7, dans lequel la première information est envoyée en utilisant l'un des éléments suivants :
un accusé de réception de demande de répétition automatique hybride, HARQ ACK ;
une demande de planification de liaison montante, SR ;
un élément de commande de contrôle d'accès au support, MAC CE ;
un rapport d'état de tampon, BSR ;
un signal de référence, RS ; ou
un préambule ;
ou, dans lequel la première information porte au moins l'une des informations suivantes :
un bitmap, dans lequel chaque bit du bitmap correspond à un état d'une autorisation ; ou
un identifiant de l'au moins une autorisation.

11. Dispositif terminal, comprenant :
un premier module de réception, configuré pour recevoir une première signalisation depuis un dispositif côté réseau ; dans lequel la première signalisation est une information de commande de liaison descendante, DCI, ou une autorisation de liaison montante ;
dans lequel la première signalisation est utilisée pour indiquer l'une des opérations suivantes :
l'activation d'au moins l'une d'au moins une autorisation ;
la désactivation d'au moins l'une d'au moins une autorisation ; et
l'activation d'une première autorisation et la désactivation d'une deuxième autorisation d'au moins une autorisation,
dans lequel l'au moins une autorisation comprend au moins deux autorisations, et la première autorisation et la deuxième autorisation sont des autorisations différentes parmi les au moins deux autorisations ; dans lequel l'au moins une autorisation est une autorisation de liaison latérale ;
un module d'envoi (501), configuré pour envoyer une première information au dispositif côté réseau, dans lequel la première information est utilisée pour indiquer un état cible d'au moins une autorisation, la première information porte un bitmap, chaque bit du bitmap correspond à l'état cible d'une autorisation, et l'état cible comprend au moins l'un des états suivants : un état désactivé ou un état activé.

12. Dispositif terminal selon la revendication 11, dans lequel une ressource pour envoyer la première information comprend l'une des suivantes :
une première ressource qui est déterminée sur la base d'un temps de réception de la première signalisation ; et
une ressource, indiquée par la première signalisation, pour la première information.

13. Dispositif terminal selon la revendication 12, dans lequel la première ressource comprend l'une des suivantes :
une ressource ayant une différence par rapport au temps de réception qui est supérieure ou égale à une première durée dans le domaine temporel ;
une ressource, ayant une différence minimale par rapport au temps de réception dans le domaine temporel, parmi des ressources configurées pour le dispositif terminal ; ou
une ressource, ayant une différence maximale par rapport au temps de réception dans le domaine temporel ou une différence qui est égale à une deuxième durée, parmi les ressources configurées pour le dispositif terminal.

14. Dispositif terminal selon la revendication 11,
dans lequel la première information est envoyée en utilisant l'un des éléments suivants :
un accusé de réception de demande de répétition automatique hybride, HARQ ACK ;
une demande de planification de liaison montante, SR ;
un élément de commande de contrôle d'accès au support, MAC CE ;
un rapport d'état de tampon, BSR ;
un signal de référence, RS ; ou
un préambule.

15. Dispositif côté réseau, comprenant :
un premier module d'envoi, configuré pour envoyer une première signalisation à un dispositif terminal ; dans lequel la première signalisation est une information de commande de liaison descendante, DCI, ou une autorisation de liaison montante ;
dans lequel la première signalisation est utilisée pour indiquer l'une des opérations suivantes :
l'activation d'au moins l'une d'au moins une autorisation ;
la désactivation d'au moins l'une d'au moins une autorisation ; et
l'activation d'une première autorisation et la désactivation d'une deuxième autorisation d'au moins une autorisation,
dans lequel l'au moins une autorisation comprend au moins deux autorisations, et la première autorisation et la deuxième autorisation sont des autorisations différentes parmi les au moins deux autorisations ; dans lequel l'au moins une autorisation est une autorisation de liaison latérale ;
un module de réception (601), configuré pour recevoir une première information depuis le dispositif terminal, dans lequel
la première information est utilisée pour indiquer un état cible d'au moins une autorisation, la première information porte un bitmap, chaque bit du bitmap correspond à l'état cible d'une autorisation, et l'état cible comprend au moins l'un des états suivants : un état désactivé ou un état activé.
